# FASCICULE DE BREVET EUROPEEN

(11) **EP 2 404 084 B1**
(45) Date de publication et mention de la délivrance du brevet: **08.11.2017**
(21) Numéro de dépôt: 10715303.3
(22) Date de dépôt: 05.03.2010
(51) Int. Cl.: F16J 13/06, B65D 90/00, C12M 1/00

(54) **MONTAGE À JUPE AUTO-SERRANTE POUR L'OBTURATION DE, OU LE RACCORD SUR, UNE COLLERETTE ANNULAIRE**
ANORDUNG MIT EINER SELBSTKLEMMENDEN SCHÜRZE ZUM SCHLIESSEN EINES RINGFÖRMIGEN BUNDS ODER ZUR VERBINDUNG DAMIT
ASSEMBLY HAVING A SELF-CLAMPING SKIRT FOR CLOSING AN ANNULAR COLLAR OR CONNECTING TO SAME

(30) Priorité: 06.03.2009 FR 0951428
(43) Date de publication de la demande: 11.01.2012
(73) Titulaire: SARTORIUS STEDIM FMT SAS, 13400 Aubagne (FR)
(72) Inventeur: BERNARD, Frédéric, F-83740 La Cadiere d'Azur (FR); CHEVALIER, Eric, F-75015 Paris (FR)
(74) Mandataire: Derambure, Christian
(86) Numéro de dépôt international: PCT/FR2010/050382
(87) Numéro de publication internationale: WO 2010/100387

(56) Documents cités:
- EP-A- 0 997 155
- EP-A- 1 336 572
- WO-A-97/18994
- WO-A-2007/122648
- US-A- 2 767 711

## Description

L'invention est relative aux montages à jupe auto-serrante sur une collerette annulaire, de manière fixe, amovible et étanche, à mise en place et enlèvement rapides, spécialement destinés au domaine biopharmaceutique. De tels montages visent soit l'obturation de l'ouverture d'extrémité formée par la collerette rigide soit le raccordement - avec communication - sur cette collerette.

On sait qu'il existe dans le domaine biopharmaceutique le besoin de pouvoir monter - à savoir obturer ou raccorder avec communication - de manière fixe, amovible et étanche, des pièces telles que des - ou plus précisément des parties de - récipients, tubes ou ports intégrés à des ensembles plus ou moins complexes pouvant comprendre plusieurs récipients, plusieurs tubes, plusieurs moyens fonctionnels, associés les uns avec les autres.

Pour la simplicité de l'exposé, on convient de dénommer les deux pièces qui sont ainsi à monter ou sont ainsi montées, « première pièce » et « deuxième pièce ». On convient en outre que le montage, également désigné par assemblage, a pour objet soit l'obturation soit le raccordement avec communication, et qu'en conséquence monter, ou assembler, s'entend soit d'obturer soit de raccorder avec communication.

De façon traditionnelle, de tels récipients à usage biopharmaceutique étaient réalisés en acier inoxydable et raccordés à un ou plusieurs tubes en matière plastique ou en acier inoxydable au moyen d'une ou de plusieurs pinces faisant fonction de bride, comprenant deux mors reliés entre eux, par exemple articulés, et des moyens de serrage et verrouillage. On a étendu l'application de telles réalisations au cas de récipients à usage biopharmaceutique comportant une poche en matière plastique. Ces poches sont soit relativement peu épaisses (dénommées parfois poches « pillow » ou poches « 2D » - D signifiant dimensions -) soit, comme l'expose le document FR-A-2 781 202, pourvues de deux grandes parois et soufflets latéraux, de manière à pouvoir, une fois expansée, prendre une forme tridimensionnelle et avoir un volume de 50 litres et plus (dénommées parfois poche 3D). De telles pinces, également connues sous le nom de « tri-clamp », font l'objet de nombreuses variantes d'exécution, telles que celles décrites notamment dans les documents EP-A-1 230 505, US-A- 6 708 377, US-A- 7 384 078, cette liste n'étant pas limitative. Un tel tri-clamp comprend classiquement une menotte de serrage ayant à chacune de ses deux extrémités en correspondance un renflement, un organe de serrage coopérant structurellement et fonctionnellement avec les deux renflements en vis-à-vis. Les documents EP-A-0 997 155 et EP-A-1 352 851 visent la mise en oeuvre de telles pinces ou tri-clamps.

A l'instar de la norme ISO 2852 : 1993, l'une des deux pièces objet du montage ou assemblage, par exemple la première pièce, présente une partie annulaire pourvue d'un renflement d'extrémité vers l'extérieur, dans le chant d'extrémité duquel est ménagée une rainure annulaire recevant un bourrelet d'étanchéité également annulaire. L'autre pièce, alors la deuxième pièce, présente également une partie annulaire pourvue d'un renflement d'extrémité vers l'extérieur. La pince, bride ou tri-clamp est destinée à venir se serrer sur les deux parties annulaires en les maintenant fermement l'une contre l'autre pour éviter leur désassemblage intempestif et assurer l'étanchéité.

Ces réalisations présentent un certain nombre de limites et d'inconvénients. Ces tri-clamps, classiquement à usage multiple, sont coûteux. Elles sont inadaptées au cas, de plus en plus fréquent et souhaité, d'un usage unique (en soi ou pour un processus pris globalement). Le plus souvent, leur diamètre intérieur ne dépasse pas une dizaine de centimètres, alors que de plus en plus fréquemment l'on envisage l'usage de dispositifs biopharmaceutiques plus importants en taille, notamment s'agissant des orifices des conteneurs. Leur mise en place s'avère souvent malaisée, longue et hasardeuse, dans la mesure où l'opérateur doit tenir la tri-clamp et la manoeuvrer (pour la fermer) et simultanément tenir au moins une, voire les deux, pièces, tout en les maintenant parfaitement positionnées l'une par rapport à l'autre. Ces inconvénients sont rédhibitoires lorsque, comme on le souhaite de plus en plus souvent, les deux pièces doivent pouvoir être assemblées rapidement et plus facilement.

On connaît également - par exemple du document US-A-5 350 080 - des ports pourvus de dents extérieures de maintien (dénommés parfois « hose-barb »). Ces réalisations présentent nombre de limites et d'inconvénients. Par exemple, leur diamètre est limité et ne permet pas des tailles importantes et leur mise en place, à force, est problématique.

On sait également qu'il existe dans le domaine biopharmaceutique le besoin de pouvoir monter ou assembler en vue d'un raccordement avec communication de façon fixe, rigide, amovible et étanche, des récipients à des enceintes stériles. On utilise pour ce faire des systèmes le plus souvent complexes, tels que ceux décrits dans les documents EP-A-0 800 480, EP-A-0 865 382. Ces réalisations sont bien adaptées à leur usage mais excluent l'usage unique.

L'homme du métier sait en outre qu'il existe nombre de réalisations de couvercles d'obturation, dans lesquelles une première pièce formant couvercle comporte une paroi transversale et une paroi annulaire périphérique formant jupe, et une deuxième pièce à laquelle est destiné le couvercle, comporte une collerette annulaire et une ouverture d'extrémité (EP-A-1 336 572, EP-A-1 425 227, EP-A-1 666 368, WO 2005/021396, WO 2007/122648, US-A-2 767 711). Ces réalisations sont spécifiques à leur usage et apportent des réponses à des problèmes propres qui ne sont pas ceux du domaine biopharmaceutique. Par exemple, et non limitativement, ces réalisations visent une production de masse destinée à tout un chacun et le montage ou l'assemblage est destiné à pouvoir résister pendant une durée importante (pouvant atteindre plusieurs années) ou, au contraire, le montage ou l'assemblage est éphémère et l'étanchéité n'est pas un facteur critique. Ces réalisations ne peuvent donc être transposées au domaine biopharmaceutique pour monter ou assembler, de façon fixe, rigide, amovible et étanche des pièces telles que des, ou des parties de, récipients, tubes, ou ports, avec les exigences inhérentes au domaine considéré et aux usages envisagés.

Il est également connu de l'état de la technique le document US 2,767,711 concernant un emballage pour un médicament destiné à l'oeil. L'emballage comporte un contenant et un couvercle doté d'un bourrelet de forme générale arrondie en section droite. Le couvercle comprend par ailleurs une partie centrale, une saillie annulaire dirigée vers le haut attenante à la partie centrale, un collier incurvé, comme le bourrelet, et venant en prise sur lui, une lèvre terminale qui par son extrémité vient contre la face extérieure de la paroi latérale du contenant.

Toutefois, ce document ne prévoit pas le fait que la face intérieure de la paroi transversale comporte une partie conjuguée d'un chant d'extrémité de la collerette apte à être appliquée contre lui et à participer à l'étanchéité entre les deux pièces. Au contraire, dans le document US 2,767,711, la collerette est arrondie et donc dépourvue de chant d'extrémité.

En outre, il n'est pas non plus prévu que la face intérieure de la jupe inclut une partie cylindrique de plus grand diamètre attenante à la paroi transversale, une partie cylindrique de plus petit diamètre écartée de la paroi transversale et une partie intermédiaire tronconique inclinée, telles que, à l'état actif où la première pièce est montée sur la deuxième pièce, ces parties de la face intérieure de la jupe viennent respectivement au contact avec serrage élastique de maintien et étanchéité sur les parties conjuguées de la face extérieure de la collerette de la deuxième pièce. Au contraire, ce document prévoit une jupe incurvée de forme circulaire en section et une lèvre terminale qui vient contre la face extérieure de la paroi latérale du contenant non par sa face interne, mais par son champ terminal.

Une telle réalisation présente donc notamment l'inconvénient qu'elle n'est pas adaptée pour des ouvertures de grand diamètre.

Il existe donc un besoin non satisfait pour monter ou assembler - à savoir obturer ou raccorder avec communication - de manière fixe, amovible et étanche, une première pièce et une deuxième pièce, telles que des, ou plus des parties de, récipients, tubes, ou ports, utilisées dans des procédés et dispositifs du domaine biopharmaceutique avec comme exigences inhérentes, une possibilité d'usage unique (en soi ou pour un processus pris globalement), un faible coût, une mise en place (c'est-à-dire montage ou assemblage) et un désassemblage rapides, un montage ou assemblage étanche, une possibilité d'application dans le cas de dispositifs biopharmaceutiques dont les ouvertures concernées par le raccordement peuvent atteindre une cinquantaine de centimètres de diamètre, une mise en place aisée, rapide et sûre. Il existe également un besoin d'ensembles de pièces (une première pièce et une deuxième pièce) pouvant être montées ou assemblées comme indiqué et qui procède d'une conception « versatile » permettant une grande diversité de fonctions et d'applications, dans le domaine biopharmaceutique. Dans ce domaine, et outre ce qui a été déjà indiqué, il importe que les matériaux mis en oeuvre soient tels que les composants et dispositifs réalisés à partir d'eux gardent leur intégrité lors de la stérilisation, par exemple par rayonnement γ, que les dispositifs mis en oeuvre satisfassent aux agréments des autorités sanitaires et soient compatible avec une utilisation en salle blanche. Par ailleurs, le plus souvent, les ensembles de pièces considérés ici (première pièce et deuxième pièce) sont destinés, dans le cadre d'une utilisation standard, à recevoir des fluides à pression atmosphérique ou voisine de la pression atmosphérique et à des températures positives comprises entre des températures proches de 0°C jusqu'à des températures de l'ordre de 40°C.

L'invention a pour but de répondre à ce besoin qui correspond à des exigences spécifiques du domaine biopharmaceutique.

A cet effet, selon un premier aspect, l'invention vise une pièce spécialement destinée dans le domaine biopharmaceutique à être montée de manière fixe et rigide, amovible et étanche, sur une collerette annulaire rigide d'une deuxième pièce ayant une ouverture d'extrémité, la première pièce, d'axe XX, comportant une paroi transversale apte à venir dans l'ouverture et une paroi annulaire périphérique formant jupe, dont la face intérieure est apte à venir au contact de la face extérieure de la collerette, la paroi transversale et la jupe, d'un seul tenant, étant en un matériau offrant une étanchéité intrinsèque pour le domaine biopharmaceutique et ayant un haut degré de souplesse, permettant à la première pièce qui à l'état inactif a une forme naturelle déterminée, d'être courbée sans être détériorée de sorte qu'à partir de son état inactif elle peut être étirée transversalement et élargie pour pouvoir être enfilée sur ou désenfilée de la deuxième pièce,
caractérisée par le fait que, en combinaison :
∘ la face intérieure de la paroi transversale, continue et pleine ou ayant au moins un orifice de passage, comporte une zone centrale sensiblement plane et une zone marginale positionnée en pourtour de la première pièce et présentant une continuité sensiblement plane vis-à-vis de la zone centrale afin de former une partie conjuguée d'un chant d'extrémité de la collerette apte à être appliquée contre lui et à participer à l'étanchéité entre les deux pièces ;
∘ la face intérieure de la jupe, inclut une partie cylindrique de plus grand diamètre attenante à la paroi transversale, une partie cylindrique de plus petit diamètre écartée de la paroi transversale et une partie intermédiaire tronconique inclinée, telles que, à l'état actif où la première pièce est montée sur la deuxième pièce, les parties de la jupe viennent respectivement au contact avec serrage élastique de maintien et étanchéité sur les parties conjuguées de la face extérieure de la collerette de la deuxième pièce;
∘ la première pièce, à mise en place et enlèvement rapides, étant d'obturation de la deuxième pièce lorsque la paroi transversale est continue et pleine, ou étant de raccord avec communication à la deuxième pièce, lorsque la paroi transversale comporte un orifice de passage.

Selon une réalisation, la partie intermédiaire de la face intérieure de la jupe a une forme tronconique, notamment a sur l'axe XX un angle d'inclinaison de l'ordre de 45°.

Selon une réalisation, la paroi transversale a une plus faible épaisseur que celle de la jupe et/ou que l'épaisseur de la jupe au droit de la partie de plus grand diamètre est plus grande que l'épaisseur au droit de la partie de plus petit diamètre.

Selon une réalisation, dans le cas où la paroi transversale comporte un orifice de passage, la première pièce de montage comporte, en outre, une pièce tubulaire, délimitant l'orifice de la paroi transversale solidarisée avec la paroi transversale pour former un ensemble rigide s'étendant vers l'extérieur et/ou l'intérieur de la paroi transversale. La première pièce, pourvue de la pièce tubulaire, assure une fonction de raccord et de fixation rigide et de passage ou de transfert, la pièce tubulaire, s'étendant vers l'extérieur de la paroi transversale, étant apte à recevoir et fixer rigidement et de façon étanche la partie extrême annulaire d'une troisième pièce.

Selon les réalisations, une telle pièce tubulaire est rigide ou présente une certaine capacité de déformation.

Selon une réalisation, une telle pièce tubulaire, s'étendant vers l'extérieur de la paroi transversale, comporte une paroi tubulaire pour la réception et la fixation rigide et étanche de la partie extrême annulaire de la troisième pièce et à une extrémité de la paroi tubulaire, une collerette pour la fixation rigide à la partie de la paroi transversale formant le bord de l'orifice dont elle est pourvue.

Selon une réalisation, la pièce tubulaire comporte, vers l'extérieur de sa paroi tubulaire, une paroi cylindrique extérieure, ménageant avec cette paroi tubulaire un logement cylindrique annulaire apte à recevoir la partie extrême annulaire de la troisième pièce.

Selon une réalisation, la pièce tubulaire comporte, formant un ensemble rigide avec elle, une collerette transversale, dirigée vers l'extérieur, apte à constituer un moyen de suspension de la troisième pièce, coopérant avec une paroi support pourvue d'un trou.

Selon une réalisation, dans le cas où la paroi transversale comporte un orifice de passage, il est prévu une troisième pièce ayant une partie extrême annulaire, laquelle est apte à être, ou est, fixée directement à la partie de la paroi transversale formant le bord de l'orifice.

Selon les réalisations, la troisième pièce a soit une forme de poche ouverte ou non à l'opposé de la partie extrême annulaire soit une forme de tube.

Selon une réalisation, il est prévu une pièce de fermeture associée à la troisième pièce, le cas échéant à la pièce tubulaire, ayant pour fonction d'ouvrir ou de fermer le passage formé par la partie extrême annulaire de la troisième pièce.

Selon une réalisation, la pièce de montage comporte un premier moyen périphérique annulaire d'étanchéité en forme de bourrelet arrondi en section droite transversale et situé à proximité de la jupe, un deuxième moyen périphérique annulaire d'étanchéité conjugué en forme de rainure arrondie en section droite transversale étant ménagé sur le chant d'extrémité de la collerette.

Selon une réalisation, la pièce de montage peut comporter en outre au moins une languette périphérique extérieure attenante au bord libre de la jupe et d'un seul tenant avec elle, apte à contribuer à la mise en place et/ou l'enlèvement de la première pièce sur et/ou de la collerette de la deuxième pièce.

Selon une réalisation, la pièce de montage est réalisée en silicone ou matériau équivalent.

Selon une réalisation, la pièce de montage est réalisée en un matériau présentant une dureté Shore de l'ordre de 55ShA et une capacité d'étirement élastique fonction de la différence de taille de la pièce de montage entre son état inactif et son état intermédiaire, de telle manière que tant à l'état intermédiaire qu'à l'état actif, la pièce de montage présente une déformation élastique par rapport à son état inactif où elle ne présente pas de déformation élastique, et que, à l'état actif, sa déformation élastique soit telle que la pièce de montage serre élastiquement la collerette de la deuxième pièce pour assure un maintien avec étanchéité.

Selon une réalisation, le matériau constitutif de la pièce de montage est antistatique.

Selon un deuxième aspect, l'invention vise un ensemble, spécialement destiné au domaine biopharmaceutique, comprenant une première pièce de montage telle qu'elle vient d'être décrite et une deuxième pièce sur laquelle elle est montée de manière fixe et rigide, amovible et étanche. La deuxième pièce, creuse, comporte une ouverture d'extrémité délimitée par une collerette annulaire rigide, ayant, du côté de l'ouverture, un renflement dirigé vers l'extérieur, la face extérieure de la collerette comprenant une partie de plus grand diamètre vers le renflement et l'ouverture, une partie de plus petit diamètre écartée du renflement et de l'ouverture et une partie intermédiaire, de manière que, à l'état actif où la première pièce est montée sur la deuxième pièce, les parties de la jupe viennent au contact avec serrage élastique de maintien et étanchéité sur les parties conjuguées de la face extérieure de la collerette de la deuxième pièce, la première pièce, à mise en place et enlèvement rapides sur la deuxième pièce

Selon une réalisation, le deuxième moyen d'étanchéité, tel qu'une rainure annulaire, est ménagé sur le chant d'extrémité de la collerette formant le renflement, avec lequel coopère, lorsqu'il est prévu, un premier moyen périphérique annulaire d'étanchéité en forme de bourrelet arrondi en section droite transversale et situé à proximité de la jupe.

Selon une première réalisation, le fait que la deuxième pièce est un port faisant partie d'un récipient de stockage ou de traitement, comprenant en outre une poche ayant un fond et à l'opposé du fond une ouverture destinée à être associée rigidement, respectivement associée rigidement, à la deuxième pièce à l'opposé de son ouverture d'extrémité.

Selon une réalisation, une telle poche comporte une paroi latérale souple pouvant se trouver dans deux états extrêmes, respectivement plié à plat et déployé, et dans tout état intermédiaire, et être déformée pour passer d'un état à un autre.

Selon une réalisation, le récipient comporte de façon intégrée des moyens de traitement de son contenu.

Selon une réalisation, la deuxième pièce formant port constitue en outre des moyens de protection des moyens de traitement, leur partie interne active étant essentiellement disposée dans l'espace interne de la deuxième pièce formant port lorsque la poche est à l'état plié à plat, la partie périphérique de l'espace interne de la deuxième pièce formant port formant une chambre de protection de la poche et des moyens de traitement.

Selon une réalisation, les moyens de traitement sont disposés au moins pour partie à l'intérieur de la poche en étant adjacents à son fond, à l'opposé de la deuxième pièce formant port.

Selon une seconde réalisation, la deuxième pièce est un tube.

Selon une première réalisation de l'ensemble, la paroi transversale est continue et pleine, la première pièce étant d'obturation de la deuxième pièce.

Selon une seconde réalisation de l'ensemble, la paroi transversale comporte au moins un orifice de passage, la première pièce étant de raccord avec communication à la deuxième pièce.

Selon une réalisation, l'ensemble comporte une troisième pièce comprenant une partie extrême annulaire raccordée de façon rigide et étanche à la première pièce, directement ou par l'intermédiaire de la pièce tubulaire déjà mentionnée.

Selon une réalisation, l'ensemble comporte en outre une pièce de fermeture associée à la troisième pièce, le cas échéant à la pièce tubulaire, ayant pour fonction d'ouvrir ou de fermer le passage formé par la partie extrême annulaire.

Selon un troisième aspect, l'invention vise un procédé de montage ou assemblage de la première pièce de montage à et sur la deuxième pièce d'un ensemble tel qu'il vient d'être décrit, dans lequel :
∘ on dispose d'une première pièce et d'une deuxième pièce non montées ou assemblées l'une avec l'autre;
∘ par une sollicitation extérieure suffisante, notamment manuelle, au moins sur la jupe de la première pièce, on élargit cette dernière, en restant dans le domaine de déformation élastique, jusqu'à un diamètre au moins légèrement plus grand que le diamètre extérieur maximal de la collerette vers son ouverture ;
∘ on positionne la première pièce au regard et dans l'axe de la deuxième pièce;
∘ on enfile la jupe sur la collerette, et on positionne axialement la première pièce sur la deuxième pièce;
∘ dans cette position, on cesse de solliciter la première pièce;
∘ de sorte que, dans cette situation où la première pièce, à l'état actif, est montée ou assemblée sur la deuxième pièce, les parties conjuguées de la jupe viennent au contact avec serrage élastique de maintien et étanchéité sur les parties conjuguées de la face extérieure de la collerette de la deuxième pièce.

Selon un quatrième aspect, l'invention vise un procédé de désassemblage de la première pièce de montage de la deuxième pièce d'un ensemble tel qu'il vient d'être décrit, dans lequel :
∘ on dispose d'une première pièce et d'une deuxième pièce montées ou assemblées l'une avec et sur l'autre;
∘ par une sollicitation extérieure suffisante, notamment manuelle, au moins sur la jupe de la première pièce, on élargit cette dernière jusqu'à un diamètre au moins légèrement plus grand que le diamètre extérieur maximal de la collerette vers l'ouverture ;
∘ on désenfile la première pièce de la deuxième pièce, jusqu'à ce que les deux pièces soient désassemblées.

Selon un cinquième aspect, l'invention vise un procédé de mise en oeuvre d'un ensemble tel que décrit précédemment avec poche pliable, dans lequel :
∘ on dispose d'un récipient de stockage ou de traitement ;
∘ on part d'une situation dans laquelle :
   ▪ la poche du récipient est à l'état plié à plat,
   ▪ l'ouverture d'extrémité du port du récipient formant la deuxième pièce est occulté par la première pièce disposée vers le haut et montée sur et assemblée à la deuxième pièce, et
   ▪ la poche est placée par son fond sur le fond du conteneur ;
∘ un orifice d'introduction de produit du récipient étant ouvert, on introduit progressivement dans le récipient un produit et simultanément on laisse la poche se déployer vers le haut et être mise en volume par le conteneur, jusqu'à avoir introduit dans le récipient la quantité souhaitée du produit ;
∘ on désassemble la première pièce de la deuxième pièce et on ouvre ainsi l'ouverture d'extrémité de la deuxième pièce ;
∘ cette ouverture d'extrémité de la deuxième pièce étant ainsi ouverte, on introduit par celle-ci, dans la poche, un produit et/ou un moyen de traitement et/ou de mesure du contenu de la poche et, une fois cette dernière étape terminée,
∘ on monte ou assemble la première pièce à et sur la deuxième pièce.

Dans une réalisation correspondant au cas où le récipient comporte de façon intégrée des moyens de traitement comprenant des moyens de mélange disposés à l'intérieur de la poche en étant adjacents à son fond, le procédé est tel que :
∘ l'ouverture d'extrémité du port du récipient formant la deuxième pièce étant occulté par la première pièce et un orifice d'introduction de produit du récipient étant ouvert, on introduit dans le récipient la quantité souhaitée d'un produit ;
∘ on désassemble la première pièce de la deuxième pièce et on ouvre ainsi l'ouverture d'extrémité de la deuxième pièce ;
∘ cette ouverture d'extrémité de la deuxième pièce étant ainsi ouverte, on introduit par celle-ci, dans la poche, une quantité souhaitée d'un produit ;
∘ on met en oeuvre les moyens de mélange ;
∘ on monte ou assemble la première pièce à et sur la deuxième pièce ;
∘ et on poursuit la mise en oeuvre des moyens de mélange.

Selon un sixième aspect, l'invention vise un procédé de mise en oeuvre d'un ensemble dans le cas où la troisième pièce est une poche ouverte à l'opposé de sa partie extrême annulaire, en vue d'insérer un produit P dans le récipient via la troisième pièce (poche ouverte), dans lequel :
∘ on dispose d'un récipient de stockage ou de traitement comprenant une poche et d'une troisième pièce (poche ouverte) raccordée de façon rigide et étanche à la première pièce ;
∘ on associe une pièce de fermeture à la partie extrême de la troisième pièce (poche ouverte) et on la manoeuvre pour fermer le passage formé par la partie extrême annulaire ;
∘ la troisième pièce (poche ouverte) étant ouverte à l'opposé de sa partie extrême annulaire ainsi fermée, on introduit par celle-ci, dans cette troisième pièce (poche), la quantité souhaitée du produit P;
∘ on ferme l'ouverture de la troisième pièce (poche) à l'opposé de sa partie extrême annulaire fermée ;
∘ on monte ou assemble la première pièce à et sur la deuxième pièce, aucune communication n'existant alors entre la poche du récipient de stockage ou de traitement et la troisième pièce (poche);
∘ lorsque souhaité, on manoeuvre la pièce de fermeture pour ouvrir le passage formé par la partie extrême annulaire, une communication étant alors établie entre la poche du récipient de stockage ou de traitement et la troisième pièce (poche);
∘ on fait passer le produit inséré dans la troisième pièce (poche) dans la poche du récipient de stockage ou de traitement.

Selon un sixième aspect, l'invention vise un procédé de mise en oeuvre d'un ensemble dans le cas où la troisième pièce est une poche fermée à l'opposé de sa partie extrême annulaire, en vue d'insérer un produit P dans le récipient via la troisième pièce (poche fermée), dans lequel :
∘ on dispose d'un récipient de stockage ou de traitement comprenant une poche et d'une troisième pièce (poche fermée) raccordée de façon rigide et étanche à la première pièce ;
∘ la troisième pièce (poche) étant ouverte à sa partie extrême annulaire, on introduit par celle-ci, dans cette troisième pièce (poche), la quantité souhaitée du produit P ;
∘ on associe une pièce de fermeture à la partie extrême de la troisième pièce (poche) et on la manoeuvre pour fermer le passage formé par la partie extrême annulaire;
∘ on monte ou assemble la première pièce à et sur la deuxième pièce, aucune communication n'existant alors entre la poche du récipient de stockage ou de traitement et la troisième pièce (poche) renfermant le produit P;
∘ lorsque souhaité, on manoeuvre la pièce de fermeture pour ouvrir le passage formé par la la partie extrême annulaire, une communication étant alors établie entre la poche du récipient de stockage ou de traitement et la troisième pièce (poche) ;
∘ on fait passer le produit P inséré dans la troisième pièce (poche) dans la poche du récipient de stockage ou de traitement.

On décrit maintenant plusieurs modes de réalisation de l'invention à l'aide des dessins, dans lesquels :

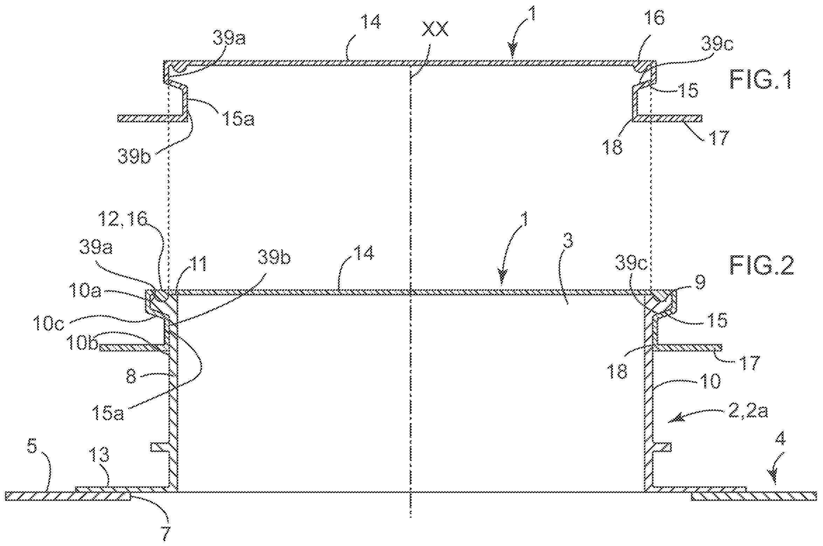

- la figure 1 est une vue en coupe axiale d'une réalisation possible de la première pièce, dans le cas d'une paroi transversale continue et pleine avec bourrelet d'étanchéité, la première pièce étant au repos, inactive et désassemblée de la deuxième pièce;
- la figure 2 est une vue en coupe axiale de la réalisation de la première pièce de la figure 1, montée sur, ou assemblée à, la deuxième pièce en forme de port faisant partie d'un récipient comprenant en outre une poche représentée de façon symbolique et partielle, la jupe de la première pièce, active, venant au contact avec serrage de maintien sur la face extérieure de la collerette de la deuxième pièce ;

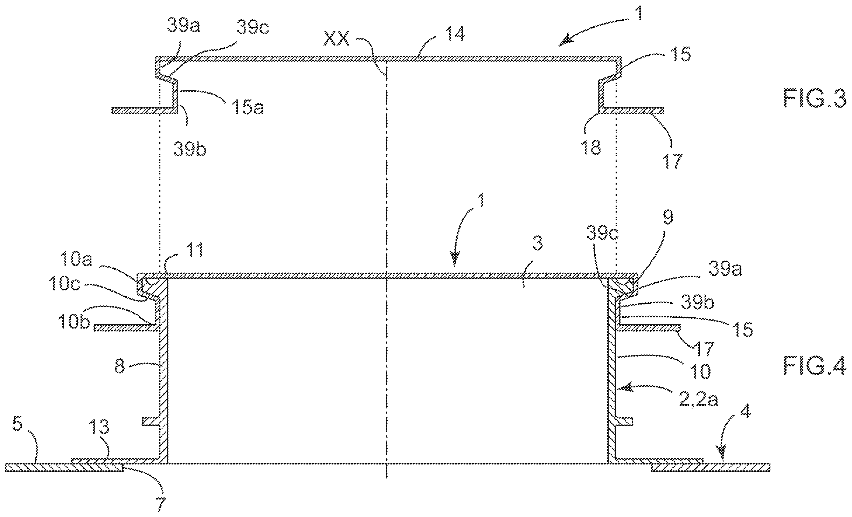

- la figure 3 est une vue en coupe axiale d'une autre réalisation possible de première pièce, dans le cas d'une paroi transversale continue et pleine sans bourrelet d'étanchéité, la première pièce étant au repos, inactive et désassemblée de la deuxième pièce;
- la figure 4 est une vue en coupe axiale de la réalisation de la première pièce de la figure 3, montée sur, ou assemblée à, la deuxième pièce en forme de port faisant partie d'un récipient comprenant en outre une poche représentée de façon symbolique et partielle, la jupe de la première pièce, active, venant au contact avec serrage de maintien sur la face extérieure de la collerette de la deuxième pièce ;

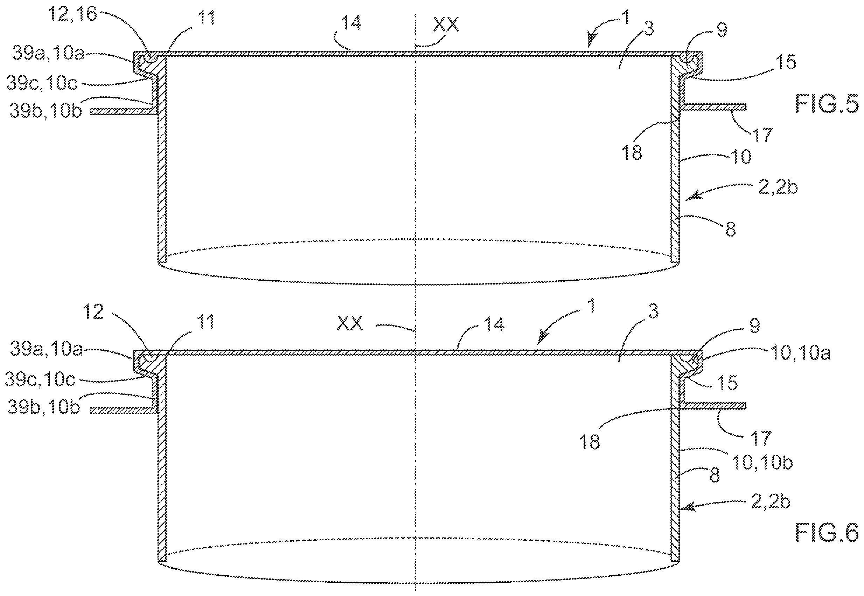

- la figure 5 est une vue en coupe axiale d'une réalisation possible de première pièce analogue à celle des figures 1 et 2, la deuxième pièce étant en forme de tube ;
- la figure 6 est une vue en coupe axiale d'une réalisation possible de première pièce analogue à celle des figures 3 et 4, la deuxième pièce étant en forme de tube ;

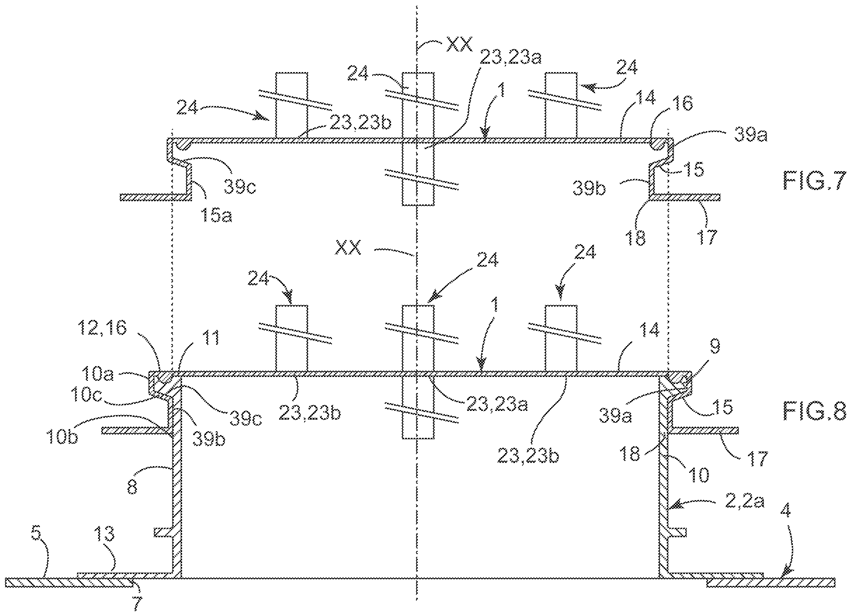

- la figure 7, analogue à la figure 1, est une vue en coupe axiale d'une autre réalisation possible de première pièce, dans le cas d'une paroi transversale avec bourrelet d'étanchéité et comportant plusieurs orifices de passage délimités par plusieurs pièces tubulaires, en l'espèce une s'étendant vers l'intérieur et plusieurs s'étendant vers l'extérieur, la première pièce étant au repos, inactive et désassemblée de la deuxième pièce
- la figure 8, analogue à la figure 2, est une vue en coupe axiale de la réalisation de la première pièce de la figure 7, montée sur, ou assemblée à, la deuxième pièce en forme de port faisant partie d'un récipient comprenant en outre une poche représentée de façon symbolique et partielle, la jupe de la première pièce, active, venant au contact avec serrage de maintien sur la face extérieure de la collerette de la deuxième pièce ;

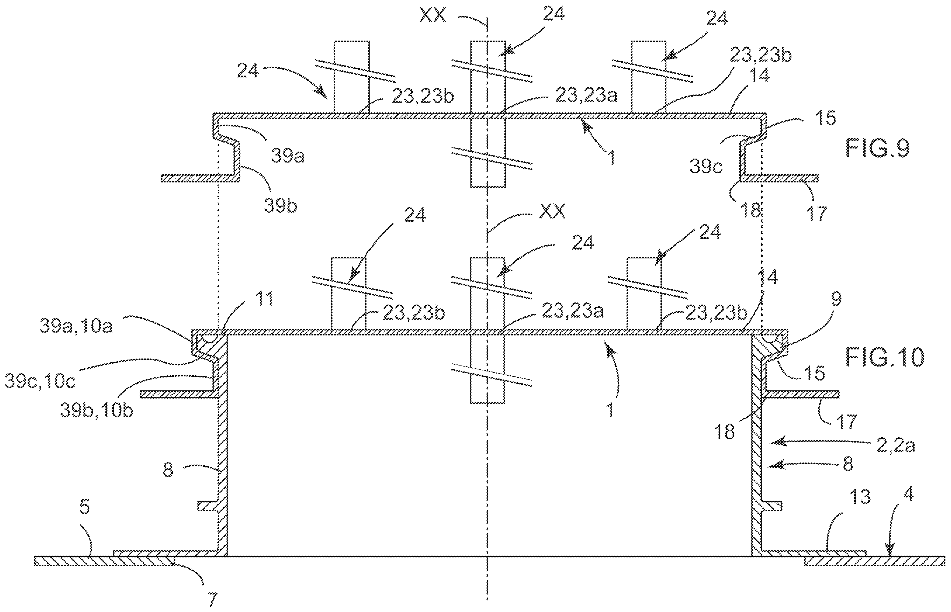

- la figure 9 est une vue en coupe axiale d'une autre réalisation possible de première pièce, dans le cas d'une paroi transversale sans bourrelet d'étanchéité et comportant plusieurs orifices de passage délimités par plusieurs pièces tubulaires, en l'espèce une s'étendant vers l'extérieur et plusieurs s'étendant vers l'extérieur ; la première pièce étant au repos, inactive et désassemblée de la deuxième pièce;
- la figure 10 est une vue en coupe axiale de la réalisation de la première pièce de la figure 9, montée sur, ou assemblée à, la deuxième pièce en forme de port faisant partie d'un récipient comprenant en outre une poche représentée de façon symbolique et partielle, la jupe de la première pièce, active, venant au contact avec serrage de maintien sur la face extérieure de la collerette de la deuxième pièce ;

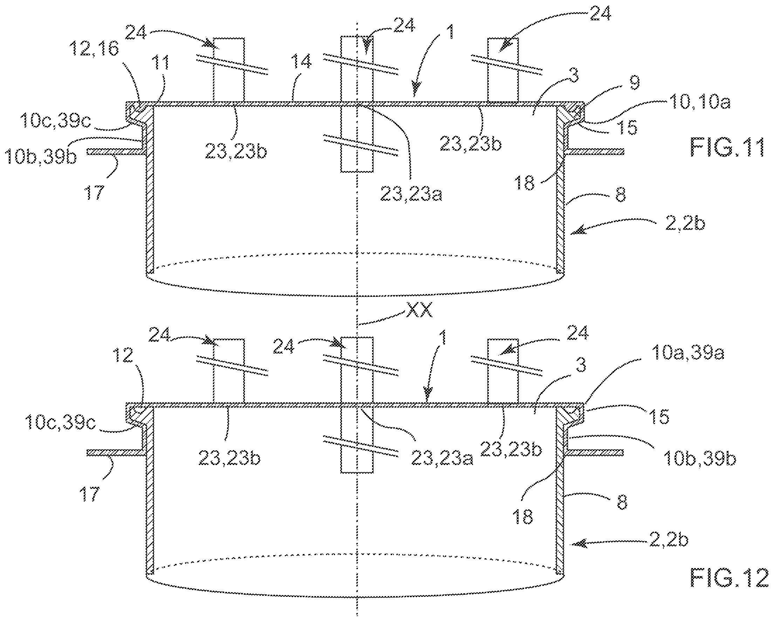

- la figure 11 est une vue analogue à la figure 8 (première pièce avec bourrelet d'étanchéité), dans le cas d'une deuxième pièce en forme de tube, la jupe de la première pièce, active, venant au contact avec serrage de maintien sur la face extérieure de la collerette de la deuxième pièce ;
- la figure 12 est une vue analogue à la figure 10 (première pièce sans bourrelet d'étanchéité), dans le cas d'une deuxième pièce en forme de tube, la jupe de la première pièce, active, venant au contact avec serrage de maintien sur la face extérieure de la collerette de la deuxième pièce ;

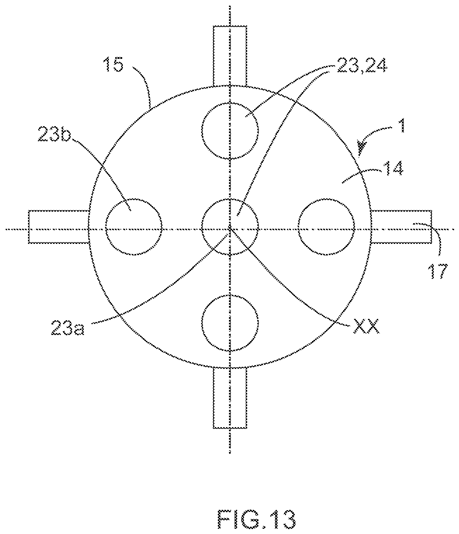

- la figure 13 est une vue de dessus en élévation de la première pièce selon une réalisation du type représenté sur les figures 7 et 9, la première pièce étant au repos, inactive et désassemblée de la deuxième pièce;

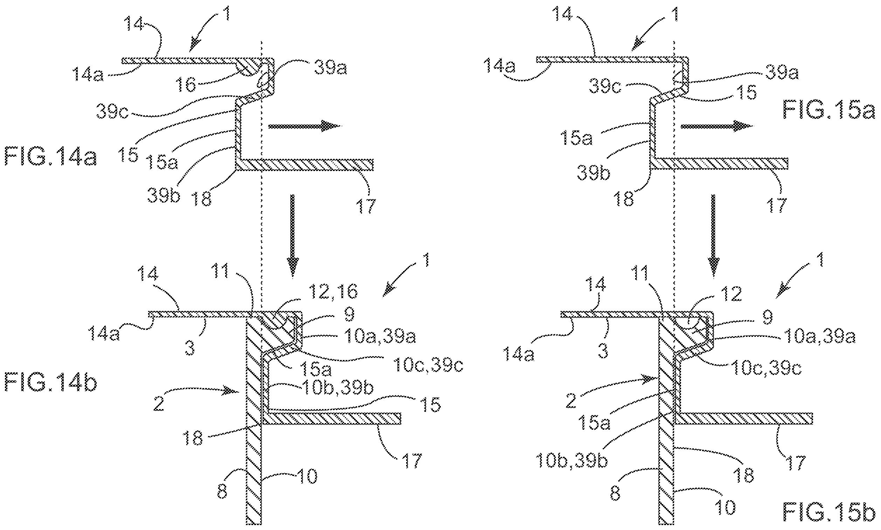

- les figures 14A et 14B sont deux schémas explicatifs, en coupe axiale et à plus grande échelle, illustrant la première pièce selon la variante de réalisation avec bourrelet d'étanchéité selon les figures 1, 2, 5, 7, 8 et 11, respectivement avant et après montage sur, ou assemblage à, la deuxième pièce ; la première pièce étant au repos, inactive et désassemblée de la deuxième pièce en figure 14A et la jupe de la première pièce, active, venant au contact avec serrage de maintien sur la face extérieure de la collerette de la deuxième pièce en figure 14B;
- les figures 15A et 15B sont deux schémas explicatifs, en coupe axiale et à plus grande échelle, illustrant la première pièce selon la variante de réalisation sans bourrelet d'étanchéité selon les figures 3, 4, 6, 9, 10 et 12, respectivement avant et après montage sur, ou assemblage à, la deuxième pièce ; la première pièce étant au repos, inactive et désassemblée de la deuxième pièce en figure 15A et la jupe de la première pièce, active, venant au contact avec serrage de maintien sur la face extérieure de la collerette de la deuxième pièce en figure 15B;

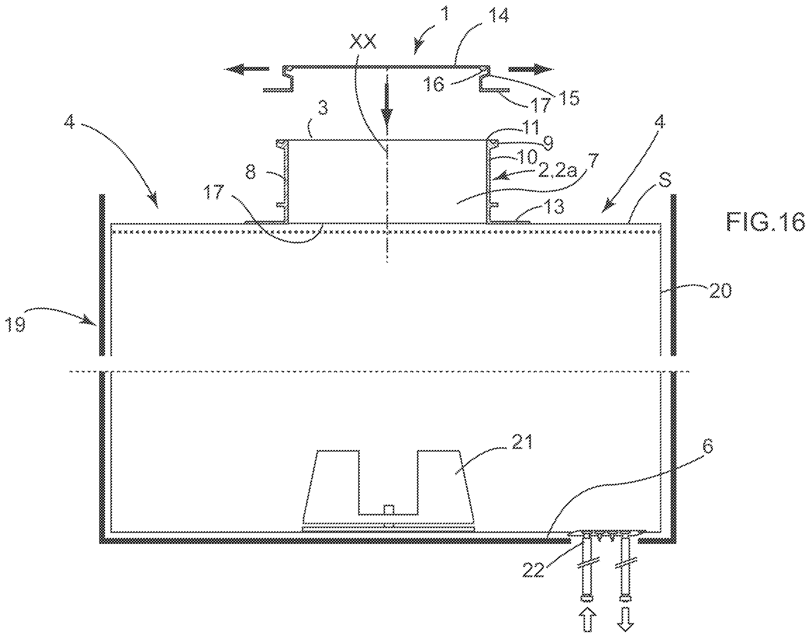

- la figure 16 est une vue schématique en coupe axiale d'un ensemble comprenant une première pièce selon la variante de réalisation avec bourrelet d'étanchéité selon les figures 1, 2, 5, 7, 8 et 11, et une deuxième pièce qui est un port faisant partie d'un récipient comprenant en outre une poche placée dans un conteneur rigide extérieur, la première pièce étant désassemblée de la deuxième pièce mais en regard de l'ouverture de la collerette de la deuxième pièce ;

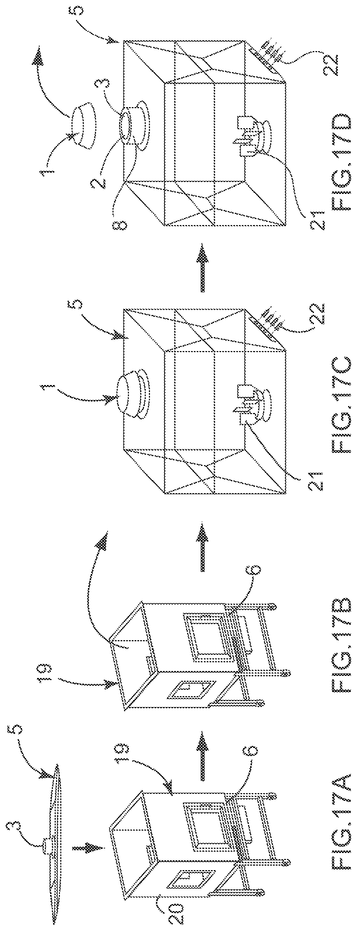

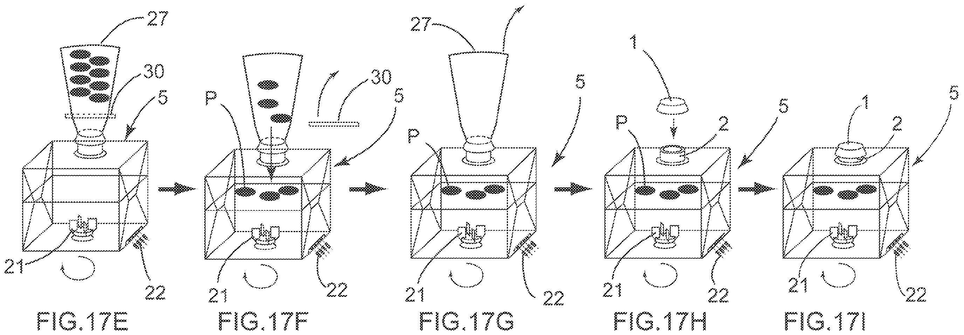

- la figure 17 est une série de neuf schémas successifs, 17A à 17I, illustrant les étapes successives d'un procédé de mélange mettant en oeuvre une première pièce à paroi transversale continue et pleine;

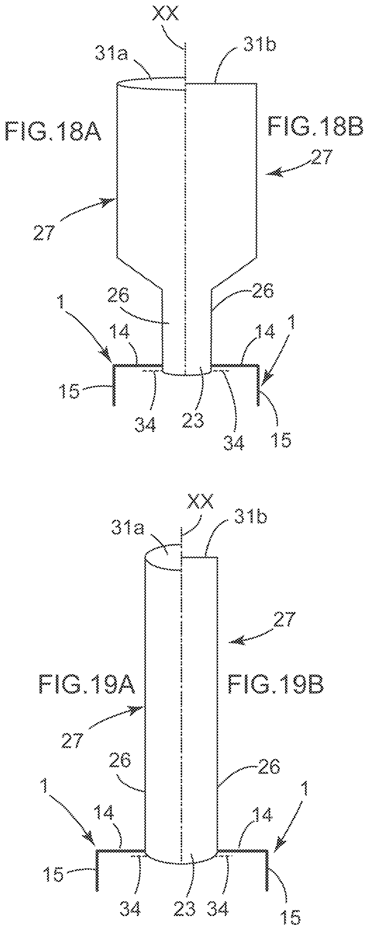

- les figures 18A et 18B sont deux demies-vues en coupe axiale d'un ensemble comportant une troisième pièce solidarisée directement à la première pièce dont la paroi transversale comporte une ouverture, la troisième pièce étant en forme de poche ouverte (demie-vue de gauche ou figure 18A) ou en forme de poche fermée (demie-vue de droite ou figure 18B), la première pièce étant ici représentée de façon purement symbolique ;
- les figures 19A et 19B sont deux demies-vues en coupe axiale d'un ensemble comportant une troisième pièce solidarisée directement à la première pièce dont la paroi transversale comporte une ouverture, la troisième pièce étant en forme de tube ouvert (demie-vue de gauche ou figure 19A) ou en forme de tube fermé (demie-vue de droite ou figure 19B), la première pièce étant ici représentée de façon purement symbolique ;

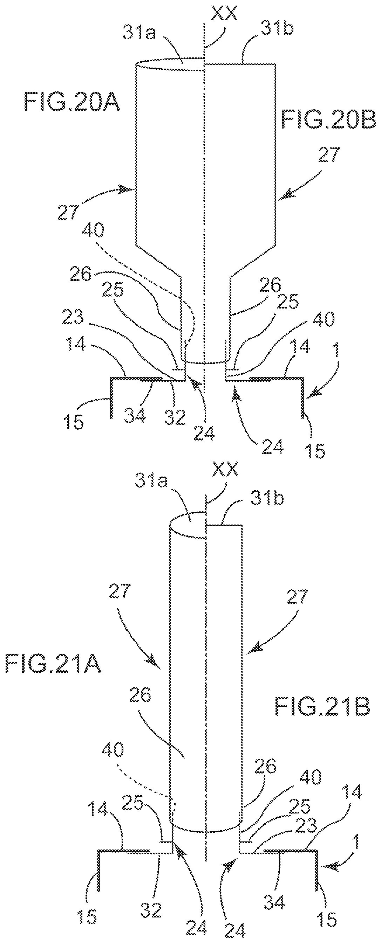

- les figures 20A et 20B sont deux demies-vues analogues aux figures 18A et 18B, l'ensemble comportant une troisième pièce solidarisée indirectement à la première pièce dont la paroi transversale comporte une ouverture par l'intermédiaire d'une pièce tubulaire, la troisième pièce étant en forme de poche ouverte (demie-vue de gauche ou figure 20A) ou en forme de poche fermée (demie-vue de droite ou figure 20B), la première pièce étant ici représentée de façon purement symbolique ;
- les figures 21A et 21B sont deux demies-vues en coupe axiale d'un ensemble comportant une troisième pièce solidarisée indirectement à la première pièce dont la paroi transversale comporte une ouverture, par l'intermédiaire d'une pièce tubulaire, la troisième pièce étant en forme de tube ouvert (demie-vue de gauche ou figure 21A) ou en forme de tube fermé (demie-vue de droite ou figure 21B), la première pièce étant ici représentée de façon purement symbolique ;

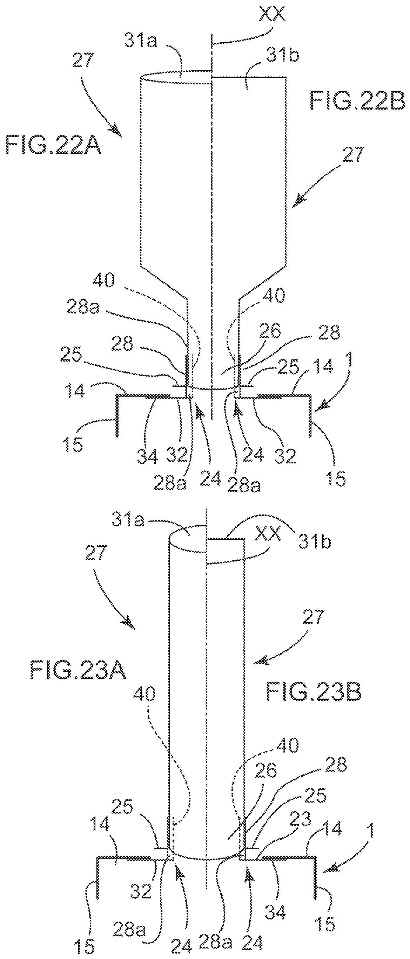

- les figures 22A, 22B, 23A et 23B sont analogues aux figures respectives 20A, 20B, 21A et 21B, la pièce tubulaire ayant une autre forme de réalisation, la première pièce étant ici représentée de façon purement symbolique ;

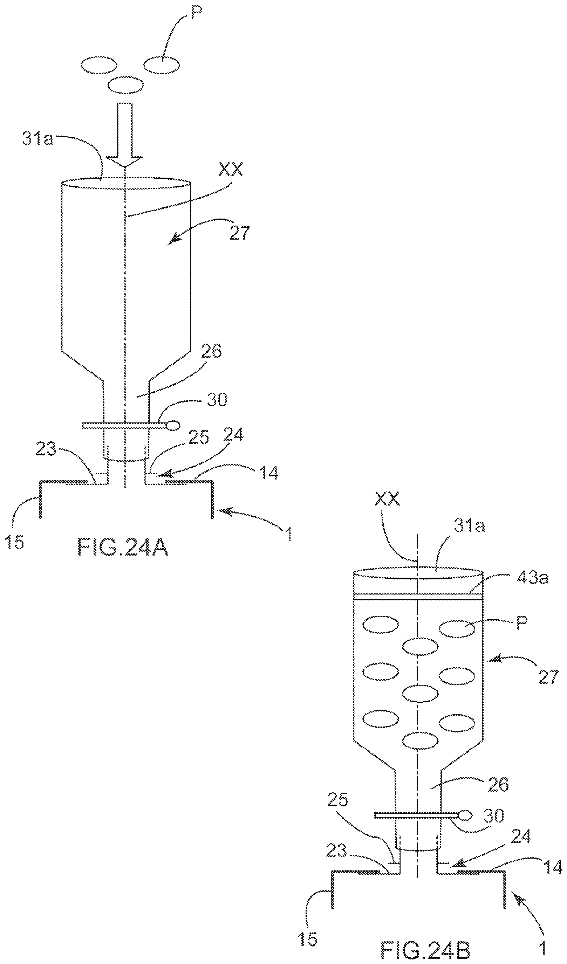

- les figures 24A et 24B sont deux vues en coupe axiale illustrant deux étapes successives d'un procédé de remplissage avec un produit, d'un ensemble comportant une troisième pièce en forme de poche ouverte axialement, solidarisée indirectement à la première pièce dont la paroi transversale comporte une ouverture par l'intermédiaire d'une pièce tubulaire telle que celle représentée sur les figures 20A et 20B, la première pièce étant ici représentée de façon purement symbolique ;

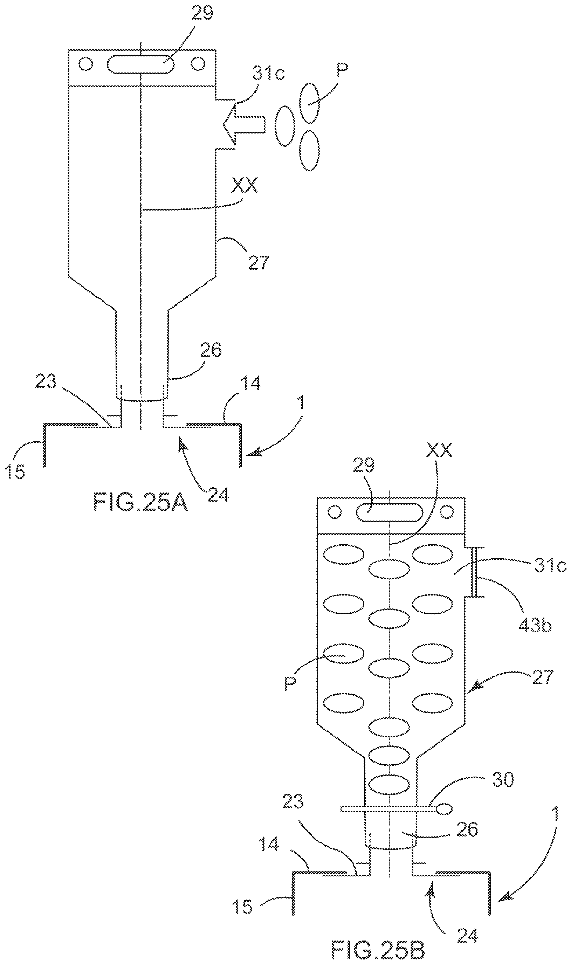

- les figures 25A et 25B sont deux vues analogues aux figures 24A et 24B, dans le cas d'une troisième pièce en forme de poche ouverte latéralement, la première pièce étant ici représentée de façon purement symbolique ;

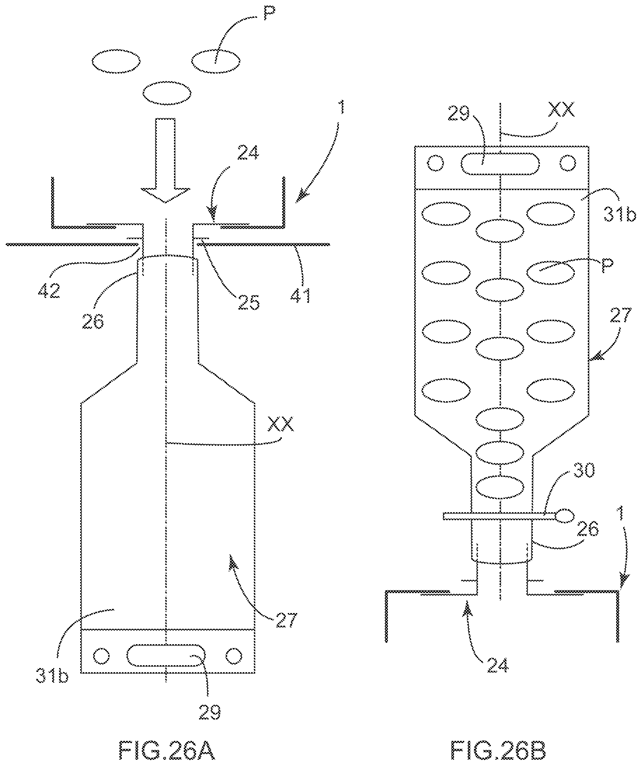

- les figures 26A et 26B sont deux vues en coupe axiale illustrant deux étapes successives d'un procédé de remplissage avec un produit, d'un ensemble comportant une troisième pièce en forme de poche fermée, solidarisée indirectement à la première pièce dont la paroi transversale comporte une ouverture par l'intermédiaire d'une pièce tubulaire telle que celle représentée sur les figures 20A et 20B, la première pièce étant ici représentée de façon purement symbolique ;

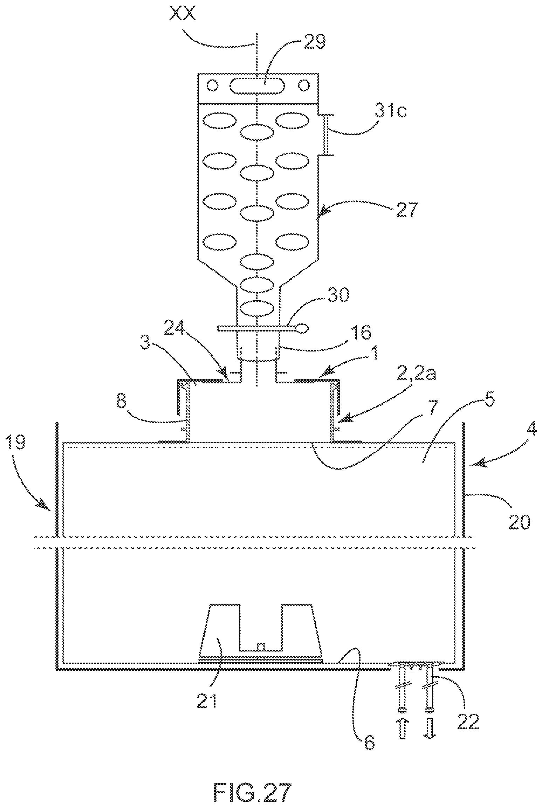

- la figure 27 est une vue schématique en coupe axiale d'un ensemble comprenant une première pièce selon la variante de réalisation sans bourrelet d'étanchéité selon les figures 3, 4, 6, 9, 10 et 12, 15A et 15B et une deuxième pièce qui est un port faisant partie d'un récipient comprenant en outre une poche placée dans un conteneur rigide extérieur, la première pièce étant montée sur et assemblée à la deuxième pièce, l'ensemble comportant également une troisième pièce en forme de poche ouverte latéralement et solidarisée indirectement à la première pièce dont la paroi transversale comporte une ouverture par l'intermédiaire d'une pièce tubulaire telle que celle représentée sur les figures 25A et 25B.

On se réfère maintenant aux figures 1 et 2 qui montrent une première pièce 1 de montage ou d'assemblage, et en l'espèce d'obturation, montée ou assemblée de manière fixe, amovible et étanche sur une deuxième pièce 2, rigide, creuse, de stockage ou de passage, avec une mise en place et un enlèvement rapides.

Les deux pièces 1 et 2, l'ensemble 1+2 formé par les deux pièces montées et assemblées, et les procédés et dispositifs associés sont spécialement destinés au domaine biopharmaceutique. On entend par là qu'ils sont conçus pour répondre à toutes les exigences et satisfaire à toutes les contraintes propres à ce domaine technique.

On décrit maintenant plus spécialement la deuxième pièce 2.

Dans la réalisation ici considérée, la deuxième pièce 2 est un port 2a ayant une ouverture d'extrémité 3, et fait partie d'un récipient 4 de stockage ou de traitement (figure 16), comprenant en outre une poche 5 ayant un fond 6 et à l'opposé du fond 6 une ouverture 7 destinée à être associée rigidement, respectivement associée rigidement, à la deuxième pièce 2 à l'opposé de son ouverture d'extrémité 3.

La deuxième pièce 2 présente un axe XX et comporte une collerette 8, annulaire, délimitant l'ouverture d'extrémité 3.

La deuxième pièce 2 est rigide avec un degré tel qu'elle est apte à encaisser les forces de serrage exercée sur elle par la première pièce 1, comme décrit par la suite.

L'ouverture d'extrémité 3 peut avoir un diamètre plus ou moins grand ou au contraire petit en fonction des applications. Dans le cas de récipients 4 de grande contenance, par exemple 3.000 litres, destiné au mélange, il peut être important que l'ouverture d'extrémité 3 ait un diamètre assez grand, par exemple pouvant atteindre de l'ordre de 50 centimètres. La pièce 1 est adaptée à ce cas de figure, tout comme à celui de très petits diamètres.

La collerette 8 forme, du côté de l'ouverture 3, un renflement 9 dirigé radialement vers l'extérieur.

La face extérieure 10 de la collerette 8 comprend une partie de forme cylindrique 10a de plus grand diamètre vers le renflement 9 et l'ouverture 3, une partie de forme cylindrique 10b de plus petit diamètre écartée du renflement 9 et de l'ouverture 3 et une partie 10c intermédiaire de liaison de forme tronconique dont la grande base est attenante à la partie 10a de plus grand diamètre et dont la petite base est attenante à la partie 10b de plus petit diamètre. En l'espèce, l'angle d'inclinaison de la partie 10c intermédiaire de forme tronconique sur l'axe XX est de l'ordre de 45°.

Le chant d'extrémité 11 du renflement 9 de la collerette 8 comporte, dans la réalisation considérée, un deuxième moyen 12 d'étanchéité, périphérique et annulaire, ayant en section droite transversale une forme de rainure arrondie, par exemple au moins sensiblement semi-circulaire.

A l'opposé du renflement 9 et de l'ouverture 3, dans la direction axiale, la deuxième pièce 2 comporte, faisant partie intégrante, un plateau annulaire 13 disposé radialement vers l'extérieur, rigidement fixé à la poche 5, au voisinage de son ouverture 7.

La deuxième pièce 2 a une forme cylindrique d'axe XX, à section transversale circulaire ou autre. Elle est réalisée en matière plastique ou en tout autre matériau équivalent compatible avec l'usage dans le domaine biopharmaceutique.

On décrit maintenant plus spécialement la première pièce 1, dans la réalisation ici considérée.

La première pièce 1 présente un axe XX qui, lorsque les deux pièces 1 et 2 sont montées l'une sur l'autre ou assemblées l'une à l'autre, est confondu avec l'axe XX de la deuxième pièce 2, les deux pièces 1 et 2 étant montées et assemblées coaxialement.

La première pièce 1 comporte une paroi transversale 14, ayant une face extérieure et une face intérieure 14a. Dans la réalisation considérée, la paroi transversale 14 est continue et pleine, la première pièce 1 ayant une fonction d'obturation une fois montée sur, et assemblée à, la deuxième pièce 2.

Comme cela est bien visible sur les figures, la face intérieure 14a de la paroi transversale 14 est formé d'une zone centrale sensiblement plane et d'une zone marginale positionnée en pourtour de la zone centrale afin de former une partie conjuguée du chant d'extrémité 11 de la collerette 3 apte à être appliquée contre lui et à participer à l'étanchéité entre les deux pièces 1, 2.

Selon cette réalisation, il existe une continuité sensiblement plane entre les zones centrale et marginale de la paroi transversale 14. Plus particulièrement, ces zones centrale et marginale s'étendent sensiblement selon un même plan.

Par ailleurs, aucune partie de la paroi transversale 14 ne vient sur la face interne de la collerette 8.

Ainsi, lorsque la première pièce 1, montée de manière fixe et rigide sur la deuxième pièce 2, doit être retirée, il est possible d'étirer, par élasticité, la paroi transversale 14 de cette première pièce 1 sans qu'aucune portion ne vienne en butée contre la face intérieure de la collerette 8.

Dans ce cas de figure, la zone centrale de la paroi transversale 14 peut être étirée transversalement et glisser sur le chant d'extrémité 11 de la collerette 8 jusqu'à ce que la première pièce 1 soit dans un état intermédiaire où elle est plus fortement étirée transversalement et où elle peut être totalement retirée,

De la même façon, lorsque la première pièce 1 est dans un état inactif et qu'elle doit être montée de manière fixe et rigide sur la deuxième pièce 2, il est possible d'étirer transversalement, par élasticité, la paroi transversale 14 de cette première pièce 1 et de venir positionner la première pièce 1 fortement étirée sur le chant d'extrémité 11 de la collerette 8. Grâce à la continuité sensiblement plane qui lie les zones centrale et marginale de la paroi transversale 14, celle-ci peut reposer sur le chant d'extrémité 11 de la collerette 8 et glisser sur lui sans qu'aucune portion ne vienne perturber ce glissement. La première pièce revient alors dans un état actif pour lequel la zone marginale de la paroi transversale 14 forme une partie conjuguée de ce chant d'extrémité 11.

La première pièce 1 comporte également une paroi annulaire périphérique formant jupe 15, ayant une face extérieure et une face intérieure 15a.

La paroi transversale 14 et la jupe 15 sont d'un seul tenant, par exemple venues ensemble de fabrication.

Comme indiqué, la paroi transversale 14 a pour fonction, lorsque les deux pièces 1 et 2 sont montées et assemblées, de venir dans l'ouverture 3 afin de l'occulter.

La jupe 15 a pour fonction, lorsque les deux pièces 1 et 2 sont montées et assemblées, de venir, par sa face intérieure 15a, au contact de la face extérieure 10 de la collerette 8, avec un serrage de maintien, encaissé par la rigidité suffisante de la deuxième pièce 2. Les parties des faces 10, 10a, 10b et 10c, d'une part et 15a d'autre part, au contact l'une de l'autre avec serrage de maintien sont qualifiées de « conjuguées ».

Les deux pièces 1, 2 ont des formes complémentaires permettant leur montage et assemblage. En particulier, la face intérieure conjuguée 15a de la jupe a une forme complémentaire des parties conjuguées des faces 10, 10a, 10b et 10c.

La face intérieure 15a de la jupe 15 comprend, par conséquent, une partie de forme cylindrique 39a de plus grand diamètre attenante à la paroi transversale 14, une partie de forme cylindrique 39b de plus petit diamètre écartée axialement de la paroi transversale 14 et une partie 39c intermédiaire de liaison de forme tronconique dont la grande base est attenante à la partie 39a de plus grand diamètre et dont la petite base est attenante à la partie 39b de plus petit diamètre. L'angle d'inclinaison de la partie 39c intermédiaire de forme tronconique sur l'axe XX est de l'ordre de 45°.

Une fois les deux pièces 1 et 2 montées et assemblées, la partie 39a de la jupe vient au contact avec serrage de maintien sur la partie 10a de la face extérieure 10 de la collerette 8, ces deux parties 39a et 10a étant conjuguées, tandis que la partie 39b vient au contact de maintien avec serrage et est conjuguée de la partie 10b et la partie 39c vient au contact avec serrage de maintien et est conjuguée de la partie 10c.

La première pièce 1 est réalisée en un matériau offrant une étanchéité intrinsèque, outre que la première pièce 1 est montée et assemblée sur la deuxième pièce 2 avec également une étanchéité entre elles. On entend ici par étanchéité, celle requise pour une application biopharmaceutique, concernant l'air, l'eau et notamment une barrière aux bactéries.

La première pièce 1 est réalisée en un matériau ayant des caractéristiques de souplesse et de déformabilité élastique, respectivement de valeur et dans une plage appropriées aux besoins résultant de l'application, des fonctions remplies et des résultats recherchés.

Plus précisément, la première pièce 1 présente tout d'abord un haut degré de souplesse, lui permettant, sous une action extérieure, telle qu'une action manuelle exercée par un opérateur mettant en oeuvre la première pièce, d'être courbée ou incurvée avec une grande amplitude, sans être détériorée. La première pièce 1 n'est donc pas rigide, bien qu'elle présente à l'état inactif, en l'absence d'action extérieure, une forme naturelle déterminée. La première pièce 1 se prête donc facilement à une manipulation incluant une certaine déformation.

D'autre part, et en combinaison, la première pièce 1 présente également une capacité d'étirement dans une plage de déformation élastique. Ainsi, à partir de son état inactif en l'absence d'action extérieure, et dès lors qu'une traction suffisante, telle qu'une action manuelle exercée par un opérateur mettant en oeuvre la première pièce, est appliquée à la première pièce 1, celle-ci est étirée. Une fois que la traction a cessé, la première pièce 1 revient à sa forme et à sa dimension d'origine.

Ce sont ces propriétés, combinées à la forme et à la dimension de la première pièce 1, en relation avec la deuxième pièce 2, qui font que la première pièce 1 répond aux besoins résultant de l'application, des fonctions remplies et des résultats recherchés.

La première pièce 1 peut se trouver dans trois états ou situations typiques :
- Un état au repos, où la première pièce 1 est inactive, désassemblée de la deuxième pièce 2 et non soumise à des sollicitations extérieures de déformation ou d'étirement ; la première pièce prend alors sa forme et sa dimension naturelle, comme représenté sur les figures 1 et 14A ;
- Un état actif, où la première pièce 1 est montée sur, ou assemblée à, la deuxième pièce 2, la jupe 15 de la première pièce 1 venant au contact avec serrage de maintien sur la face extérieure 10 de la collerette 8 de la deuxième pièce 2, la première pièce étant légèrement étirée transversalement dans son domaine de déformation élastique, comme représenté sur les figures 2 et 14B;
- Un état intermédiaire, où la première pièce 1 est plus fortement étirée transversalement pour être suffisamment élargie afin de pouvoir être enfilée sur (mise en place) ou désenfilée (enlevée) de la deuxième pièce 2 qui comporte le renflement 9, la première pièce restant dans son domaine de déformation élastique ; dans cet état intermédiaire, la première pièce 1 peut être plus ou moins courbée ou incurvée, le cas échéant avec une certaine amplitude, de manière à favoriser cette mise en place ou cet enlèvement.

Le passage de l'état actif, où la première pièce 1 est montée sur la deuxième pièce 2, à l'état intermédiaire, où la première pièce 1 est plus fortement étirée transversalement pour être suffisamment élargie afin de pouvoir être enfilée ou désenfilée, est facilité par la continuité sensiblement plane des zones centrale et marginale de la paroi transversale 14.

En effet, cette continuité permet d'assurer ou de faciliter le glissement de la zone centrale, d'une part, et de la zone marginale, d'autre part, sur le chant d'extrémité 11 de la collerette 8 lorsque la paroi transversale 14 - qui est associée ou en passe d'être associée à la collerette 8 de la deuxième pièce 2 - passe d'un état actif à un état intermédiaire.

La face intérieure conjuguée 15a de la jupe 15, à l'état inactif au repos, présente un diamètre légèrement intérieur plus petit que le diamètre extérieur de la face extérieure conjuguée 10 de la collerette 8 (voir figures 14A et 14B).

La paroi transversale 14 comporte sur sa face intérieure 14a un premier moyen 16 d'étanchéité, périphérique et annulaire, en saillie, situé à proximité de la jupe 15 et ayant en section droite transversale une forme de bourrelet arrondi, par exemple au moins sensiblement semi-circulaire.

Les deux moyens d'étanchéité 12 et 16 sont conjugués et destinés à être associés l'un dans l'autre et ainsi à coopérer l'un avec l'autre, lorsque les deux pièces 1 et 2 sont montées ou assemblées.

La première pièce 1 présente par conséquent des dimensions relatives par rapport à la deuxième pièce 2, ainsi que des caractéristiques élastiques sélectionnés et choisies à raison des fonctions devant être remplies et des performances à atteindre.

Plus précisément, à partir de l'état au repos de la première pièce 1 (figure 14A), la première pièce 1 peut être élargie transversalement tout en restant dans le domaine de déformation élastique, jusqu'à l'état intermédiaire tel que la face intérieure 15a de la jupe, plus précisément la partie 39c, présente un diamètre au moins légèrement plus grand que le diamètre extérieur maximal de la collerette 8 vers l'ouverture 3, à l'endroit du renflement 9.

Ainsi, par une sollicitation extérieure d'élargissement suffisante, la jupe 15 de la première pièce 1 peut être élargie et enfilée sur, puis ainsi mise en place, montée ou assemblée à et sur, la collerette 8 de la deuxième pièce 2.

Par une sollicitation extérieure suffisante, elle peut, ensuite, inversement, être enlevée et désassemblée de la collerette 8.

Il est à noter que la mise en place de la première pièce 1 sur la deuxième pièce 2 est aisée, rapide et sûre. Il en est de même de l'enlèvement ou désassemblage de la première pièce 1 de la deuxième pièce 2. Le montage ou assemblage est donc également amovible et compte tenu de ce qui précède, bien adapté au cas où le processus employé nécessite plusieurs opérations d'ouverture et de fermeture, notamment pour des durées relativement limitées.

Une fois la première pièce 1 montée ou assemblée sur la deuxième pièce 2, comme il a été exposé, et en l'absence de sollicitation extérieure d'élargissement, la jupe 15 est disposée sur et autour de la collerette 8 avec leurs faces conjuguées 15a et 10 en contact avec serrage de maintien, tandis que le bourrelet d'étanchéité 16 de la paroi transversale 14 est associé avec étanchéité en étant logé dans la rainure d'étanchéité 12 conjuguée de la collerette 8 (figure 14B).

Dans cette situation, la première pièce 1 se trouve dans son domaine de déformation élastique et la jupe 15 exerce sur la collerette 8 une force de serrage apte à assurer un maintien fixe et rigide, outre qu'étanche, avec la deuxième pièce 2 empêchant le désassemblage intempestif des deux pièces 1, 2, en l'absence d'une sollicitation extérieure suffisante.

Dans l'application considérée, à savoir le domaine biopharmaceutique, une telle première pièce 1 est apte à assurer un montage ou assemblage sur la deuxième pièce 2 aux fins d'obturation de l'ouverture d'extrémité 3, avec maintien de cette obturation en l'absence d'une sollicitation extérieure suffisante. Il est entendu que dans cette application, le récipient 4 comportant la poche 5 est destiné à recevoir un fluide à pression atmosphérique ou voisine de la pression atmosphérique et à température comprise positive comprise environ 0°C et de l'ordre de 40°Centre la température ambiante et de l'ordre de 40°C. Ce récipient 4 est destiné en outre à rester stable, les pièces 1 et 2 étant disposées vers le haut. Par conséquent, le fluide contenu dans le récipient 4 ne peut par lui-même exercer sur la première pièce 1 une sollicitation extérieure qui serait suffisante pour entraîner son désassemblage.

Dans une réalisation possible, non exclusive d'autres, la première pièce 1 comporte en outre une ou plusieurs languettes 17 périphériques disposées radialement vers l'extérieur, attenantes au bord libre 18 de la jupe 15, attenant à la partie 39b, et d'un seul tenant avec elle. Cette ou ces languettes 17 sont de nature à faciliter l'élargissement de la jupe 15 en vue de son montage ou assemblage.

Pour obtenir les performances précédemment indiquées, la première pièce 1 est réalisée en silicone ou matériau équivalent, particulièrement bien adapté au domaine biopharmaceutique, notamment gardant son intégrité lors de la stérilisation par rayonnement y, répondant aux agréments des autorités sanitaires, et pouvant être mis en oeuvre en salle blanche.

Par exemple, dans une réalisation, on utilise un silicone de dureté Shore 55ShA.

La première pièce 1 est réalisée en un matériau présentant une capacité d'étirement élastique fonction de la différence de taille de la pièce de montage 1 entre son état inactif et son état intermédiaire, de telle manière que tant à l'état intermédiaire qu'à l'état actif, la pièce de montage 1 présente une déformation élastique par rapport à son état inactif où elle ne présente pas de déformation élastique, et que, à l'état actif, sa déformation élastique soit telle qu'elle serre élastiquement la collerette 8 de la deuxième pièce 2 pour assure un maintien avec étanchéité..

Préférentiellement, le matériau constitutif de la première pièce 1 est antistatique, et cela afin de ne pas gêner la mise en oeuvre de l'ensemble comportant les deux pièces 1, 2, dans le cas où elles sont en contact avec des matériaux en poudre.

D'autre part, les matériaux constitutifs de la première pièce 1 et de la deuxième pièce 2 ainsi que l'état de surfaces des faces conjuguées de la collerette 8 et de la jupe 15 sont tels, ou choisis de manière telle, que leur contact réciproque se fasse avec un frottement élevé ce qui contribue au maintien du montage ou assemblage des deux pièces 1 et 2 une fois réalisé.

Par suite de sa constitution, une telle première pièce 1 peut être relativement peu coûteuse à fabriquer, ce qui offre une possibilité d'usage unique (en soi ou pour un processus pris globalement).

Dans une réalisation possible, la paroi transversale 14 a une épaisseur de l'ordre du millimètre, tandis que la jupe 15 a une épaisseur pouvant aller de l'ordre de trois millimètres au droit de la partie 39a à de l'ordre de quatre millimètres au droit de la partie 39b.

En effet, il importe que la déformation élastique de la première pièce 1 montée ou assemblée sur la deuxième pièce 2 concerne plutôt la paroi transversale 14 que la jupe 15 qui, de façon optimale, doit venir s'appliquer sur la partie conjuguée de la face extérieure 10 avec serrage.

Pour assembler une telle première pièce 1 à et sur une telle deuxième pièce 2, on procède comme suit, ainsi que cela résulte des figures 14A et 14B.

On part d'une situation (figure 14A) où l'on dispose d'une première pièce 1 au repos, non soumise à une sollicitation extérieure, dont la forme et les dimensions sont adaptées, comme indiqué précédemment, à celle d'une deuxième pièce 2 à obturer, dont on dispose par ailleurs.

Par une sollicitation extérieure suffisante, notamment manuelle, au moins sur la jupe 15 de la première pièce 1, on élargit cette dernière, en restant dans le domaine de déformation élastique, jusqu'à un diamètre au moins légèrement plus grand que le diamètre extérieur maximal de la collerette 8 vers l'ouverture 3, à l'endroit du renflement 9.

Par ailleurs, on positionne la première pièce 1 au regard et dans l'axe XX de la deuxième pièce 2 et, la jupe 15 de la première pièce 1 ayant été ainsi élargie, on peut alors l'enfiler sur la collerette 8 de la deuxième pièce 2, jusqu'à ce que le bourrelet 16 vienne se loger dans la rainure 12, de manière que les deux pièces 1 et 2 soient parfaitement positionnées axialement.

Dans cette position, on cesse de solliciter la première pièce 1 et notamment la jupe 15 dans le sens de son élargissement, jusqu'à ce que, par déformation élastique, la jupe 15 aille dans le sens de son rétrécissement jusqu'à ce que sa face conjuguée intérieure 15a vienne en contact avec serrage élastique sur la face extérieure conjuguée 10 de la collerette 8 (figure 14B).

Dans cette situation, comme déjà indiqué, la jupe 15 exerce sur la collerette 8, notamment par les parties conjuguées 39a et 39b de sa face intérieure 15a, une force de serrage apte à assurer un maintien fixe et rigide sur la deuxième pièce 2, notamment les parties conjuguées 10a et 10b, ce maintien empêchant le désassemblage intempestif des deux pièces 1, 2, en l'absence d'une sollicitation extérieure suffisante.

En ce qui concerne l'étanchéité entre les deux pièces 1 et 2, elle est assurée en premier lieu, au niveau du chant d'extrémité 11 et de la partie conjuguée de la face intérieure 14a de la paroi 14, en deuxième lieu, au niveau des moyens d'étanchéité 12 et 16, et, en troisième lieu, au niveau des parties conjuguées 10a et 39a. Du fait des parties conjuguées inclinées 10c et 39c, la partie conjuguée de la face intérieure 14a de la paroi 14 est appliquée contre le chant d'extrémité 11 de la deuxième pièce 2.

Pour le désassemblage de la première pièce 1 de la deuxième pièce 2, on procède comme suit.

Par une sollicitation extérieure suffisante, notamment manuelle, au moins sur la jupe 15 de la première pièce 1, on élargit cette dernière jusqu'à un diamètre au moins légèrement plus grand que le diamètre extérieur maximal de la collerette 8 vers l'ouverture 3, à l'endroit du renflement 9.

Puis, on désenfile la première pièce 1 de la deuxième pièce 2, jusqu'à ce que les deux pièces 1, 2, soient désassemblées.

Les figures 3 et 4 montrent une autre réalisation, analogue à la précédente, si ce n'est que la première pièce 1 est dépourvue du bourrelet formant le premier moyen d'étanchéité prévu dans la réalisation précédente.

Les figures 15A et 15B, analogues au figures 14A et 14B illustrent le montage ou assemblage dans cette la réalisation correspondante.

La figure 5 montre une autre réalisation, identique aux figures 1 et 2 en ce qui concerne la première pièce 1, tandis que la deuxième pièce 2 n'est pas un port comme auparavant mais un tube 2b dont le diamètre peut être plus ou moins petit ou au contraire grand. Un tel tube 2b peut présenter une rigidité d'ensemble apte à encaisser les forces de serrage exercées par la première pièce 1. Le cas échéant, la rigidité du tube 2b est telle que celui-ci peut être incurvé à force si nécessaire par une sollicitation extérieure suffisante.

Un tel tube 2b comporte également une collerette 8 formée par sa partie extrême, cette collerette 8 ayant la même structure et la même fonction que pour le port 2a.

La figure 6 montre une autre réalisation, identique aux figures 3 et 4 en ce qui concerne la première pièce 1, tandis que la deuxième pièce 2 n'est pas non plus un port, mais un tube comme dans le cas de la figure 5.

Ainsi, l'invention peut faire l'objet de nombreuses applications différentes.

La première pièce 1 et l'ensemble 1+2 comprenant la première pièce 1 et la deuxième pièce 2 sont d'un coût de production permettant un usage unique. Le montage ou assemblage et le désassemblage des deux pièces 1 et 2 est rapide et sûr. Il assure une étanchéité comparable à celle obtenue aujourd'hui avec les tri-clamps. Les ouvertures 3 et 7 peuvent avoir un diamètre compris entre le centimètre ou une fraction de centimètre et une cinquantaine de centimètres, sans que la conception des pièces n'ait à être bouleversée.

Quant à la « versatilité », elle peut être illustrée en référence aux différentes variantes de réalisation déjà décrites et celles qui le sont ensuite.

Dans les réalisations précédentes, et comme représenté sur la figure 16, la deuxième pièce 2, en l'espèce un port 2a, fait partie d'un récipient 4 comprenant une poche 5 destinée à reposer par son fond 6 dans le fond d'un conteneur extérieur rigide de maintien 19 ouvert vers le haut. Une telle poche 5 comporte une paroi latérale 20, souple, à soufflets, pouvant se trouver dans deux états extrêmes, respectivement plié à plat et déployé, et dans tout état intermédiaire, et être déformée pour passer d'un état à un autre. Cette disposition constructive permet à la poche 5 - dite 3D - d'être de grandes dimensions et d'avoir un volume important pouvant atteindre 3.000 litres.

Dans la réalisation représentée, le récipient 4 comporte également, intégré à la poche 5, des moyens 21 de traitement de son contenu.

On entend par « traitement » toute action sur un produit biopharmaceutique, ou concernant ce produit, et impliquant un contact avec le produit, ce produit se trouvant bien entendu dans la poche 5.

Dans la réalisation particulière décrite par la suite, un tel traitement est le mélange, les moyens 21 étant des moyens de mélange.

Dans d'autres réalisations, le traitement est l'aération, la filtration, la mesure, cette liste n'étant pas limitative.

Dans tous les cas, on met en oeuvre des moyens 21 de traitement adaptés à l'action souhaitée.

Par exemple, les moyens 21 comportent une partie active interne, rigide dans son ensemble et, selon les cas, déformable ou non, telle qu'une hélice dans le cas du mélange, un aérateur dans le cas de l'aération, un filtre dans le cas de la filtration, une sonde dans le cas de la mesure, cette liste n'étant pas davantage limitative.

Dans tous les cas, les moyens 21 de traitement sont disposés au moins pour partie à l'intérieur de la poche 5 en étant adjacents à son fond 6. Ils sont donc situés à l'opposé de la deuxième pièce 2 ou port 2a.

Avec une telle réalisation, la deuxième pièce 2 ou port 2a, peut constituer en outre des moyens de protection des moyens 21 de traitement dont la partie interne active est essentiellement disposée dans l'espace interne de la deuxième pièce 2 ou port 2a, lorsque la poche 5 est à l'état plié à plat. La partie périphérique de l'espace interne de la deuxième pièce 2 ou port 2a, forme alors une chambre de protection de la poche 5 et des moyens 21 de traitement.

Un tel ensemble 1+2 peut être mis en oeuvre comme il est maintenant décrit en référence aux neuf schémas des figures 17A à 17I, formant ensemble la figure 17.

On part d'une situation où l'on dispose d'un récipient 4 comprenant une poche 5 à l'état plié à plat et un conteneur rigide 19.

Dans la réalisation représentée, la poche 5, à ce stade d'avancement du procédé, est déjà pourvue à l'intérieur des moyens 21 de traitement, par exemple ici des moyens 21 de mélange.

Dans cette situation, l'ouverture d'extrémité 3 du port 2a est occultée par la première pièce 1 disposée vers le haut et montée sur et assemblée au port 2a, comme il a été décrit précédemment.

La poche 5 est alors placée par son fond 6 sur le fond du conteneur rigide 19 (figure 17A).

La figure 17B illustre le conteneur rigide 19 contenant la poche 5, celle-ci n'étant pas visible, car masquée par les parois latérales verticales du conteneur 19.

Les schémas qui suivent, figures 17C à 17I, ne représentent que la poche 5, à plus grande échelle. Il est entendu que cette poche continue à se trouver dans le conteneur rigide 19, ici non représenté pour ne pas masquer la poche 5. En outre, on a représenté la poche 5 complètement déployée, dès le début du processus, pour des raisons de facilité de lecture des figures. Mais il doit être compris que la poche 5 se déploie vers le haut au fur et à mesure de son remplissage.

La poche 5 comprend un - ou plusieurs - orifices 22 d'introduction de produit, situés notamment à l'endroit ou au voisinage du fond 6, accessible depuis l'extérieur du conteneur 19.

Comme représenté sur la figure 17C, l'orifice 22 étant ouvert, on introduit progressivement dans la poche 5 du récipient 4 un produit fluide, en l'espèce liquide ou plus ou moins pâteux, et simultanément on laisse la poche se déployer vers le haut et être mise en volume par le conteneur 19 qui guide ses parois latérales 20.

On poursuit l'introduction de produit jusqu'à avoir introduit dans la poche 5 la quantité souhaitée de ce produit.

Jusqu'ici la première pièce 1 et le port 2a étaient montés ou assemblés, l'ouverture 3 étant de ce fait occultée.

Comme représenté sur la figure 17D, on désassemble alors la première pièce 1 du port 2a, comme il a été décrit précédemment, et on ouvre ainsi l'ouverture d'extrémité 3 du port 2a.

Comme représenté sur les figures 17E, 17F et 17G, l'ouverture d'extrémité 3 étant ainsi ouverte, on introduit par celle-ci, dans la poche 5, un une quantité souhaitée d'un autre produit, notamment en poudre. Cette introduction sera décrite par la suite.

Comme représenté sur la figure 17H, une fois cette dernière étape d'introduction terminée, on monte ou assemble de nouveau la première pièce 1 préalablement désassemblée (ou une pièce 1 identique) à et sur le port 2a, comme il a été décrit précédemment et on occulte de nouveau l'ouverture 3.

On met en oeuvre les moyens 21 de mélange ou on continue de les mettre en oeuvre si celle-ci a débuté lors de l'introduction du produit en poudre.

Dans les réalisations des figures 9 à 13, la paroi transversale 14 comporte au moins un orifice de passage 23. En l'espèce, il est prévu cinq orifices 23, à savoir un orifice central 23a et quatre orifices latéraux 23b situés sur deux axes perpendiculaires. D'autres dispositions peuvent être envisagées, dès lors qu'elles comprennent au moins un orifice 23.

Dans ces réalisations, la paroi transversale 14 comportant au moins un orifice de passage 23, la première pièce 1 a une fonction de raccordement avec communication, une fois montée sur, et assemblée à, la deuxième pièce 2.

La figure 9 montre une réalisation de la première pièce 1 dans laquelle celle-ci est dépourvue du bourrelet formant moyen d'étanchéité comme il a été décrit précédemment, cette première pièce 1 étant au repos sans sollicitation extérieure.

La figure 10 montre une réalisation dans laquelle une telle première pièce 1 est montée ou assemblée sur un port 2a, comme il a été décrit précédemment.

La figure 11 montre une autre réalisation dans laquelle une première pièce 1 avec bourrelet formant moyen d'étanchéité comme il a été décrit précédemment est montée ou assemblée non sur un port mais sur un tube.

La figure 12 montre une autre réalisation dans laquelle une première pièce 1 dépourvue de bourrelet formant moyen d'étanchéité comme il a été décrit précédemment est montée ou assemblée sur un tel tube.

Avec les réalisations des figures 9 à 13, il est possible de tirer parti de la première pièce 1 dont la paroi transversale 14 comporte un orifice 23, pour - une fois montée sur, et assemblée à - la deuxième pièce 2, assurer une fonction de raccordement avec communication entre la deuxième pièce 2, creuse et une troisième pièce 27, creuse, au moins partiellement souple, destinée au stockage par exemple, du type général formant poche.

Comme précédemment, et comme illustré par la figure 27, la pièce 2 peut être un port 2a ayant une ouverture d'extrémité 3, qui fait partie d'un récipient 4 de stockage ou de traitement, comprenant en outre une poche 5 ayant un fond 6 et à l'opposé du fond 6 une ouverture 7 destinée à être associée rigidement, respectivement associée rigidement, à la deuxième pièce 2 à l'opposé de son ouverture d'extrémité 3. Comme précédemment, il peut être prévu dans la poche 5 des moyens 21 de traitement, comme par exemple des moyens 21 de mélange.

Une telle troisième pièce 27 comporte une partie extrême annulaire 26, du côté de laquelle elle est fixée rigidement et de façon étanche, le cas échéant de façon amovible, à la première pièce 1.

Dans une réalisation, la troisième pièce 27 est une poche, notamment souple (figures 18A, 18B, 20A, 20B, 22A, 22B, 24A, 24B, 25A, 25B, 28A, 26B, 27).

Cette réalisation peut faire l'objet de différentes variantes d'exécution.

Dans une variante d'exécution représentée sur les figures 18A, 20A, 22A, 24A et 24B, la troisième pièce 27 comporte originellement, dans l'axe XX et à l'opposé de sa partie extrême annulaire 26, une ouverture axiale 31a.

Dans une autre variante d'exécution représentée sur les figures 18B, 20B, 22B, la troisième pièce 27 est fermée en permanence à sa partie d'extrémité 31b, opposée à sa partie extrême annulaire 26. Avec une telle réalisation, il est possible de tirer parti de la partie d'extrémité 31b fermée en permanence pour y aménager un moyen d'accrochage de la troisième pièce 27, tel qu'un oeillet 29.

Dans une autre variante d'exécution représentée sur les figures 25A, 25B, la troisième pièce 27 comporte originellement, à l'opposé de sa partie extrême annulaire 26, une ouverture latérale 31c. Avec une telle réalisation, la partie d'extrémité 31b étant fermée en permanence, il est également possible d'y aménager un moyen d'accrochage de la troisième pièce 27, tel qu'un oeillet 29.

Dans une autre réalisation, la troisième pièce 27 est un tube ouvert à l'opposé de sa partie extrême annulaire 26 et raccordé à une poche ou analogue (figures 19A, 19B, 21A, 21B, 23A, 23B).

Dans les réalisations des figures 18A, 18B, 19A et 19B, la troisième pièce 27 est directement associée fixement et rigidement à la première pièce 1, le tronçon terminal élargi de la partie extrême annulaire 26 étant rigidement fixé, par exemple par soudage, à la partie 34 de la paroi transversale 14 formant le bord de l'orifice 23.

Dans les réalisations des figures 20A, 20B, 21A, 21B, 22A, 22B, 23A, 23B, 24A, 24B, 25A, 25B, 26A, 26B et 27, la troisième pièce 27 est indirectement associée fixement et rigidement à la première pièce 1, par l'intermédiaire d'une pièce tubulaire 24. En effet, la pièce tubulaire 24 est associée fixement et rigidement d'une part à la première pièce 1, d'autre part à la troisième pièce 27 en étant placée entre elles et en assurant entre elles un passage étanche. Avec un tel arrangement, la première pièce 1 pourvue de la pièce tubulaire 24 assure en combinaison une fonction de raccord et de fixation rigide avec la troisième pièce 27 et une fonction de passage ou de transfert, notamment d'un produit et/ou d'un moyen de traitement et/ou de mesure, l'ouverture d'extrémité 3 de la deuxième pièce 2 restant en effet ouverte.

Une telle pièce tubulaire 24 délimite l'orifice 23 et forme avec la première pièce 1 un ensemble rigide s'étendant vers l'extérieur et/ou l'intérieur de celle-ci. Par exemple, la pièce tubulaire 24 associée à l'orifice central 23a s'étend vers l'extérieur et l'intérieur, tandis que les pièces tubulaires 24 associées aux orifices latéraux 23 s'étendent uniquement vers l'extérieur. Par la suite, on s'intéressera plus spécialement aux pièces tubulaires 24 qui s'étendent uniquement vers l'extérieur ou à la partie extérieure des pièces tubulaires 24 qui s'étendent vers l'extérieur et l'intérieur. Une telle pièce tubulaire 24 ou une telle partie extérieure de pièce tubulaire 24 fait fonction de raccord fluidique entre la première pièce 1 et la troisième pièce 27.

Selon les réalisations, la pièce tubulaire de raccordement 24 est rigide, notamment plus rigide que la première pièce 1 et la troisième pièce 27, ou, au contraire, la pièce tubulaire de raccordement 24 présente une certaine capacité de déformation.

Afin que la pièce tubulaire de raccordement 24 puisse former un ensemble fixe, rigide et étanche avec la première pièce 1, il est prévu par exemple, de la pourvoir à l'une de ses extrémités, en l'espèce à l'extrémité attenante à la première pièce 1, d'une collerette 32, dirigée radialement vers l'extérieur.

Cette collerette 32 peut être fixée de façon rigide et étanche, par collage, soudage, ou équivalent, à la partie 34 de la paroi transversale 14 formant le bord de l'orifice 23.

La pièce tubulaire de raccordement 24 est associée de façon fixe, rigide et étanche à la troisième pièce 27. A cet effet, la paroi tubulaire 40 de la pièce tubulaire de raccordement située du côté opposé à la collerette 32 peut être fixée de façon rigide et étanche, par collage, soudage, ou équivalent, à la partie extrême annulaire 26 de la troisième pièce 27, le blocage de fin de course de montage de la troisième pièce 27 sur la pièce tubulaire de raccordement 24 étant assuré, pour autant que nécessaire, par le blocage du bord extrême libre de la partie extrême annulaire 26 sur la collerette 32 ou la paroi 14 attenante.

Dans la réalisation des figures 20A, 20B, 21A, 21B, 22A, 22B, 23A, 23B, 24A, 24B, 25A, 25B, 26A, 26B et 27, la pièce tubulaire de raccordement 24 comporte, formant un ensemble rigide avec elle, une collerette transversale 25, attenante à la paroi tubulaire 40 vers la collerette 32, dirigée radialement vers l'extérieur, continue ou non. Lorsque la troisième pièce 27 est fixée sur la première pièce 1, la collerette 25 est située à l'extérieur de la paroi transversale 14, notamment au voisinage de celle-ci.

Cette collerette transversale 25 est apte à constituer un moyen de suspension de la troisième pièce 27, coopérant avec une paroi support 41 pourvue d'un trou 42. Dans un tel cas, la troisième pièce 27 est disposée avec sa partie extrême annulaire 26 dirigée vers le haut, de sorte que la collerette transversale 25 repose sur la face supérieure de la paroi support 41 au voisinage du trou 42, tandis que la troisième pièce 27 est suspendue en dessous de la paroi support 41 (figure 26A).

Eventuellement, la collerette transversale 25 est apte à constituer un blocage de fin de course pour le bord extrême libre de la partie extrême annulaire 26.

Dans la réalisation des figures 22A, 22B, 23A, 23B, la pièce tubulaire 24 comporte, vers l'extérieur de la paroi tubulaire 40, une paroi cylindrique extérieure 28, ménageant avec la paroi tubulaire 24 un logement cylindrique annulaire 28a apte à recevoir la partie extrême annulaire 26.

Dans la réalisation des figures 24A, 24B, 25B, 26B et 27, il est prévu en outre une pièce de fermeture amovible 30, telle qu'une pince, destinée à être associée à la partie extrême annulaire 26 souple de la troisième pièce 27 avec pour fonction de fermer ou d'ouvrir le passage formé par celle-ci, afin, respectivement, d'empêcher ou au contraire d'autoriser, le passage du contenu de la troisième pièce 27 dans la poche faisant partie de la deuxième pièce 2.

Le cas échéant, la pièce de fermeture 30 est apte à être associée également à la pièce tubulaire 24, souple, avec pour fonction d'ouvrir ou de fermer le passage formé par celle-ci.

On se réfère maintenant plus spécialement aux figures 24A et 24B et on décrit le procédé de mise en oeuvre d'un ensemble comprenant outre les pièces 1 et 2, une troisième pièce 27 en forme de poche 27 comportant originellement, dans l'axe XX et à l'opposé de sa partie extrême annulaire 26, une ouverture axiale 31a. Ce procédé est destiné à insérer de façon aseptique - ou du moins protégée - un produit tel qu'un produit en poudre P dans la poche 5 associée à la deuxième pièce 2, par l'intermédiaire de la poche 27 formant la troisième pièce 27.

On part d'une situation dans laquelle on dispose d'un récipient 4 comprenant une poche 5, d'une deuxième pièce telle qu'un port 2a, d'une première pièce 1 à orifice 23 et d'une poche 27 (troisième pièce) ayant une ouverture axiale 31a à l'opposé de la partie extrême annulaire 26, cette poche 27 (troisième pièce) étant raccordée de façon rigide et étanche à la première pièce 1, directement ou indirectement par l'intermédiaire d'une pièce tubulaire 24, comme il a été décrit précédemment.

On associe une pièce de fermeture 30 à la partie extrême annulaire 26 de la poche 27 (troisième pièce) et on la manoeuvre de façon appropriée pour fermer le passage formé par celle-ci.

La poche 27 (troisième pièce) étant toujours ouverte grâce à l'ouverture 31a, à l'opposé de sa partie extrême annulaire 26 qui elle est fermée grâce à la pièce de fermeture 30, on introduit dans la poche 27, par l'ouverture 31a, la quantité souhaitée du produit P (figure 24A). Préférentiellement, cette étape est réalisée alors que l'ouverture 31a est placée en position supérieure, pour d'évidentes raisons de facilité, la poche 27 (troisième pièce) s'étendant vers le bas et la poche 5 étant placée en position inférieure.

On ferme ensuite l'ouverture 31a de la poche 27 (troisième pièce), par exemple par un soudage thermique transversal 43a, ou tout autre moyen équivalent. Ce faisant, on stocke ainsi le produit P conditionné dans la poche 27 (troisième pièce) (figure 24B).

On monte ou assemble alors la première pièce 1 à et sur la deuxième pièce 2, comme exposé précédemment. Dans cette situation, aucune communication n'existe entre la poche 27 (troisième pièce) contenant le produit P et la poche 5 du récipient 4.

Lorsqu'il est souhaité que le produit P soit introduit dans la poche 5, on manoeuvre la pièce de fermeture 30 de manière appropriée pour ouvrir le passage formé par la partie extrême annulaire 26 de la poche 27 (troisième pièce).

Une communication étant alors établie entre la poche 27 et la poche 5 du récipient 4, on fait passer le produit P stocké précédemment dans la poche 27 (troisième pièce) dans la poche 5 du récipient 4. Préférentiellement, cette étape est réalisée comme précédemment alors que la partie extrême annulaire 26 de la poche 27 (troisième pièce) est placée en position inférieure, pour d'évidentes raisons de facilité, le produit P pouvant passer par gravité de la poche 27 (troisième pièce) à la poche 5 du récipient 4 placée en dessous.

On se réfère maintenant plus spécialement aux figures 25A et 25B qui visent une variante du procédé qui vient d'être décrit.

Dans cette variante du procédé, on met en oeuvre une poche 27 (troisième pièce) qui comporte originellement non pas une ouverture axiale 31a mais une ouverture latérale 31c, la poche 27 (troisième pièce) comportant un moyen d'accrochage tel qu'un oeillet 29 à sa partie d'extrémité fermée 31b.

Cette variante du procédé est identique à la précédente, si ce n'est que le produit P est inséré dans la poche 27 (troisième pièce) non par une ouverture axiale telle que 31a, mais par l'ouverture latérale 31c, que l'on ferme ensuite l'ouverture 31c de la poche 27 (troisième pièce), par exemple par un soudage thermique de direction axiale 43b et non transversale, enfin que la poche 27 (troisième pièce) est commodément maintenue avec sa partie d'extrémité fermée 31b en position supérieure et sa partie extrême annulaire 26 en position inférieure, par simple suspension par gravité, étant suspendue par l'oeillet 29 à un crochet support approprié.

On se réfère maintenant plus spécialement aux figures 26A et 26B et on décrit le procédé de mise en oeuvre d'un ensemble comprenant outre les pièces 1 et 2, une troisième pièce 27 en forme de poche 27 (troisième pièce) ayant une partie d'extrémité fermée 31b.

On part d'une situation dans laquelle on dispose d'un récipient 4 comprenant une poche 5, d'une deuxième pièce telle qu'un port 2a, d'une première pièce 1 à orifice 23 et d'une poche 27 (troisième pièce) ayant une partie d'extrémité fermée 31b, cette poche 27 (troisième pièce) étant raccordée de façon rigide et étanche à la première pièce 1, directement ou indirectement par l'intermédiaire d'une pièce tubulaire 24, comme il a été décrit précédemment.

On introduit dans la poche 27 (troisième pièce) la quantité souhaitée du produit P par l'ouverture terminale de la partie extrême annulaire 26. Préférentiellement (figure 26A), cette étape est réalisée, pour d'évidentes raisons de facilité, alors que la poche 27 (troisième pièce) est disposée avec sa partie extrême annulaire 26 en position supérieure et sa partie d'extrémité fermée 31b en position inférieure, ce qui est rendu possible par le fait que la pièce tubulaire de raccordement 24 de la poche 27 (troisième pièce) à la première pièce 1 comporte, comme décrit précédemment, une collerette transversale 25 coopérant avec la paroi support 41 pourvue d'un trou 42. Le produit P est alors introduit dans la poche 27 (troisième pièce) par simple gravité.

Puis, on associe une pièce de fermeture 30 à la partie extrême 26 de la poche 27 (troisième pièce) et on la manoeuvre pour fermer le passage formé par celle-ci. On stocke ainsi le produit P conditionné dans la poche 27 (troisième pièce).

On monte ou assemble alors la première pièce 1 à et sur la deuxième pièce 2, comme exposé précédemment. Dans cette situation, aucune communication n'existe entre la poche 27 (troisième pièce) contenant le produit P et la poche 5 du récipient 4.

Lorsqu'il est souhaité que le produit P soit introduit dans la poche 5, on manoeuvre la pièce de fermeture 30 de manière appropriée pour ouvrir le passage formé par la partie extrême annulaire 26 de la poche 27 (troisième pièce).

Une communication étant alors établie entre la poche 27 et la poche 5 du récipient 4, on fait passer le produit P stocké précédemment dans la poche 27 (troisième pièce) dans la poche 5 du récipient 4.

Préférentiellement, cette étape est réalisée après retournement haut-bas de la poche 27 (troisième pièce), la partie extrême annulaire 26 de la poche 27 (troisième pièce) précédemment en position supérieure étant amenée en position inférieure, et la partie d'extrémité fermée 31b précédemment en position inférieure étant amenée en position supérieure, la poche 27 (troisième pièce) étant suspendue par gravité par l'oeillet 29 à un crochet support approprié. Ainsi, le produit P peut passer par gravité de la poche 27 (troisième pièce) à la poche 5 du récipient 4 placée en dessous.

## Revendications

1. Ensemble, spécialement destiné au domaine biopharmaceutique, comprenant une première pièce de montage (1) et une deuxième pièce (2), la deuxième pièce (2) étant creuse, et comportant une ouverture d'extrémité (3) délimitée par une collerette annulaire rigide (8), ayant, du côté de l'ouverture (3), un renflement (9) dirigé vers l'extérieur, la face extérieure (10) de la collerette (8) comprenant une partie (10a) de plus grand diamètre vers le renflement (9) et l'ouverture (3), une partie (10b) de plus petit diamètre écartée du renflement (9) et de l'ouverture (3) et une partie (10c) intermédiaire, la première pièce (1) étant dans le domaine biopharmaceutique montée de manière fixe et rigide, amovible et étanche, sur la collerette annulaire (8) rigide de la deuxième pièce (2), la première pièce (1), d'axe XX, comportant une paroi transversale (14) venant dans l'ouverture (3) et une paroi annulaire périphérique (15) formant jupe, dont la face intérieure (15a) vient au contact de la face extérieure (10) de la collerette (8), la paroi transversale (14) et la jupe (15), d'un seul tenant, étant en un matériau offrant une étanchéité intrinsèque pour le domaine biopharmaceutique et ayant un haut degré de souplesse, permettant à la première pièce (1) qui à l'état inactif a une forme naturelle déterminée, d'être courbée sans être détériorée de sorte qu'à partir de son état inactif elle peut être étirée transversalement et élargie pour pouvoir être enfilée sur ou désenfilée de la deuxième pièce (2),
dans lequel :
∘ la face intérieure (14a) de la paroi transversale (14), continue et pleine ou ayant au moins un orifice de passage (23), comporte une zone centrale sensiblement plane et une zone marginale positionnée en pourtour de la première pièce (1) et présentant une continuité sensiblement plane vis-à-vis de la zone centrale afin de former une partie conjuguée d'un chant d'extrémité (11) de la collerette (3) appliquée contre lui et participant à l'étanchéité entre les deux pièces (1, 2) ;
∘ la première pièce (1), à mise en place et enlèvement rapides de la deuxième pièce (2), étant d'obturation de la deuxième pièce (2) lorsque la paroi transversale (14) est continue et pleine, ou étant de raccord avec communication à la deuxième pièce (2), lorsque la paroi transversale (14) comporte un orifice de passage (23) ;
**caractérisé en ce que** la face intérieure (15a) de la jupe (15), inclut une partie (39a) cylindrique de plus grand diamètre attenante à la paroi transversale (14), une partie (39b) cylindrique de plus petit diamètre écartée de la paroi transversale (14) et une partie intermédiaire (39c) tronconique inclinée, telles que, à l'état actif où la première pièce (1) est montée sur la deuxième pièce (2), les parties (39a, 39b et 39c) de la jupe (15) viennent respectivement au contact avec serrage élastique de maintien et étanchéité sur les parties conjuguées (10a, 10b et 10c) de la face extérieure (10) de la collerette (8) de la deuxième pièce (2).

2. Ensemble selon la revendication 1, **caractérisé par le fait que** la partie intermédiaire (39c) de la face intérieure (15a) de la jupe (15) a une forme tronconique, ayant sur l'axe XX un angle d'inclinaison de l'ordre de 45°.

3. Ensemble selon l'une quelconque des revendications 1 et 2, **caractérisé par le fait que** la paroi transversale (14) a une plus faible épaisseur que celle de la jupe (15) et/ou que l'épaisseur de la jupe (15) au droit de la partie (39a) de plus grand diamètre est plus grande que l'épaisseur au droit de la partie (39b) de plus petit diamètre.

4. Ensemble selon l'une quelconque des revendications 1 à 3, dans le cas où la paroi transversale (14) comporte un orifice de passage (23), **caractérisé par le fait que** la première pièce (1) comporte, en outre, une pièce tubulaire (24), délimitant l'orifice (23), solidarisée à la paroi transversale (14) pour former un ensemble rigide s'étendant vers l'extérieur et/ou l'intérieur de la paroi transversale (14), la première pièce (1) pourvue de la pièce tubulaire (24) assurant une fonction de raccord et de fixation rigide et de passage ou de transfert, la pièce tubulaire (24) s'étendant vers l'extérieur de la paroi transversale (14) étant apte à recevoir et fixer rigidement et de façon étanche la partie extrême annulaire (26) d'une troisième pièce (27).

5. Ensemble selon la revendication 4, **caractérisé par** une pièce tubulaire (24) s'étendant vers l'extérieur de la paroi transversale (14), comportant une paroi tubulaire (40) pour la réception et la fixation rigide et étanche de la partie extrême annulaire (26) de la troisième pièce (27) et à une extrémité de la paroi tubulaire (40), une collerette (32) pour la fixation rigide à la partie (34) de la paroi transversale (14) formant le bord de l'orifice (23).

6. Ensemble selon la revendication 5, **caractérisé par** une pièce tubulaire (24) comportant, vers l'extérieur de la paroi tubulaire (40), une paroi cylindrique extérieure (28), ménageant avec la paroi (40) un logement cylindrique annulaire (28a) apte à recevoir la partie extrême annulaire (26) de la troisième pièce (27) et/ou, formant un ensemble rigide avec elle, une collerette transversale (25), dirigée vers l'extérieur, apte à constituer un moyen de suspension de la troisième pièce (27), coopérant avec une paroi support (41) pourvue d'un trou (42).

7. Ensemble selon l'une quelconque des revendications 1 à 3, dans le cas où la paroi transversale (14) comporte un orifice de passage (23), **caractérisé par** une troisième pièce (27) ayant une partie extrême annulaire (26), laquelle est apte à être, ou est, fixée directement à la partie (34) de la paroi transversale (14) formant le bord de l'orifice (23), la troisième pièce (27) ayant soit une forme de poche ouverte ou non à l'opposé de la partie extrême annulaire (26) soit une forme de tube.

8. Ensemble selon l'une quelconque des revendications 3 à 7, **caractérisé par** une pièce de fermeture (30) associée à la troisième pièce (27), le cas échéant à la pièce tubulaire (24), ayant pour fonction d'ouvrir ou de fermer le passage formé par la partie extrême annulaire (26).

9. Ensemble selon l'une quelconque des revendications 1 à 8, **caractérisé par** un premier moyen périphérique annulaire d'étanchéité (16) en forme de bourrelet arrondi en section droite transversale et situé à proximité de la jupe (15), et un deuxième moyen périphérique annulaire d'étanchéité conjugué (12) en forme de rainure arrondie en section droite transversale, ménagée sur le chant d'extrémité (11) de la collerette (8).

10. Ensemble selon l'une quelconque des revendications 1 à 9, **caractérisé par le fait que** la première pièce (1) comporte en outre au moins une languette périphérique extérieure (17) attenante au bord libre (18) de la jupe (15) et d'un seul tenant avec elle, apte à contribuer à la mise en place et/ou l'enlèvement de la première pièce (1) sur et/ou de la collerette (8) de la deuxième pièce (2).

11. Ensemble selon l'une quelconque des revendications 1 à 10, **caractérisé par le fait que** la première pièce (1) est réalisée en silicone ou matériau équivalent ou en un matériau présentant une dureté Shore de l'ordre de 55ShA et une capacité d'étirement élastique fonction de la différence de taille de la première pièce (1) entre son état inactif et son état intermédiaire, de telle manière que tant à l'état intermédiaire qu'à l'état actif, la première pièce (1) présente une déformation élastique par rapport à son état inactif où elle ne présente pas de déformation élastique, et que, à l'état actif, sa déformation élastique soit telle qu'elle serre élastiquement la collerette (8) de la deuxième pièce (2) pour assurer un maintien avec étanchéité, et en particulier en un matériau antistatique.

12. Ensemble selon l'une quelconque des revendications 1 à 11, **caractérisé par le fait que** la deuxième pièce (2) est un port (2a) faisant partie d'un récipient (4) de stockage ou de traitement, comprenant en outre une poche (5) ayant un fond (6) et à l'opposé du fond (6) une ouverture (7) destinée à être associée rigidement, respectivement associée rigidement, à la deuxième pièce (2) à l'opposé de son ouverture d'extrémité (3), et une paroi latérale souple (20) pouvant se trouver dans deux états extrêmes, respectivement plié à plat et déployé, et dans tout état intermédiaire, et être déformée pour passer d'un état à un autre.

13. Ensemble selon la revendication 12, **caractérisé par le fait que** le récipient (4) comporte de façon intégrée des moyens (21) de traitement de son contenu.

14. Ensemble selon l'une quelconque des revendications 12 et 13, en ce que la revendication 13 dépend de la revendication 7, **caractérisé par le fait que** la deuxième pièce (2) formant port (2a) constitue en outre des moyens de protection des moyens (21) de traitement, leur partie interne active étant essentiellement disposée dans l'espace interne de la deuxième pièce (2) formant port (2a) lorsque la poche (5) est à l'état plié à plat, la partie périphérique de l'espace interne de la deuxième pièce (2) formant port (2a) formant une chambre de protection de la poche (5) et des moyens (21) de traitement.

15. Ensemble selon l'une quelconque des revendications 13 et 14, **caractérisé par le fait que** les moyens (21) de traitement sont disposés au moins pour partie à l'intérieur de la poche (5) en étant adjacents à son fond (6), à l'opposé de la deuxième pièce (2) formant port (2a).

16. Ensemble selon l'une quelconque des revendications 1 à 15, **caractérisé par le fait que** la deuxième pièce (2) est un tube.

17. Ensemble selon l'une quelconque des revendications 1 à 16, dans lequel la paroi transversale (14) est continue et pleine, la première pièce (1) étant d'obturation de la deuxième pièce (2).

18. Ensemble selon l'une quelconque des revendications 1 à 16, dans lequel la paroi transversale (14) comporte au moins un orifice de passage (23), la première pièce (1) étant de raccord avec communication à la deuxième pièce (2).

19. Ensemble selon la revendication 18, **caractérisé par le fait qu'**il comporte la troisième pièce (27) comprenant une partie extrême annulaire (26) raccordée de façon rigide et étanche à la première pièce (1), directement ou par l'intermédiaire de la pièce tubulaire (24) et, en outre, en particulier, une pièce de fermeture (30) associée à la troisième pièce (27), le cas échéant à la pièce tubulaire (24), ayant pour fonction d'ouvrir ou de fermer le passage formé par la partie extrême annulaire (26).

20. Procédé de montage ou assemblage de la première pièce de montage (1) à et sur la deuxième pièce (2) de l'ensemble selon l'une quelconque des revendications 1 à 19, dans lequel :
∘ on dispose d'une première pièce (1) et d'une deuxième pièce (2) non montées ou assemblées l'une avec l'autre;
∘ par une sollicitation extérieure suffisante, notamment manuelle, au moins sur la jupe (15) de la première pièce, on élargit cette dernière, en restant dans le domaine de déformation élastique, jusqu'à un diamètre au moins légèrement plus grand que le diamètre extérieur maximal de la collerette (8) vers l'ouverture (3);
∘ on positionne la première pièce (1) au regard et dans l'axe de la deuxième pièce (2);
∘ on enfile la jupe (15) sur la collerette (8), et on positionne axialement la première pièce (1) sur la deuxième pièce (2);
∘ dans cette position, on cesse de solliciter la première pièce (1);
∘ de sorte que, dans cette situation où la première pièce (1), à l'état actif, est montée ou assemblée sur la deuxième pièce (2), les parties (39a, 39b et 39c) de la jupe (15) viennent au contact avec serrage élastique de maintien et étanchéité sur les parties conjuguées (10a, 10b et 10c) de la face extérieure (10) de la collerette (8) de la deuxième pièce (2).

21. Procédé de désassemblage de la première pièce de montage (1) de la deuxième pièce (2) de l'ensemble selon l'une quelconque des revendications 1 à 19, dans lequel :
∘ on dispose d'une première pièce (1) et d'une deuxième pièce (2) montées ou assemblées l'une avec et sur l'autre;
∘ par une sollicitation extérieure suffisante, notamment manuelle, au moins sur la jupe (15) de la première pièce (1), on élargit cette dernière jusqu'à un diamètre au moins légèrement plus grand que le diamètre extérieur maximal de la collerette (8) vers l'ouverture (3);
∘ on désenfile la première pièce (1) de la deuxième pièce (2), jusqu'à ce que les deux pièces (1, 2), soient désassemblées.

22. Procédé de mise en oeuvre de l'ensemble selon la revendication 17 en ce qu'elle dépend des revendications 12 à 14, dans lequel :
∘ on dispose d'un récipient de stockage ou de traitement (4) ;
∘ on part d'une situation dans laquelle :
• la poche (5) du récipient (4) est à l'état plié à plat,
• l'ouverture d'extrémité (3) du port (2a) du récipient (4) formant la deuxième pièce (2) est occulté par la première pièce (1) disposée vers le haut et montée sur et assemblée à la deuxième pièce (2), et
• la poche (5) est placée par son fond sur le fond du conteneur (19);
∘ un orifice d'introduction (22) de produit du récipient (4) étant ouvert, on introduit progressivement dans le récipient (4) un produit et simultanément on laisse la poche (5) se déployer vers le haut et être mise en volume par le conteneur (19), jusqu'à avoir introduit dans le récipient (4) la quantité souhaitée du produit;
∘ on désassemble la première pièce (1) de la deuxième pièce (2) et on ouvre ainsi l'ouverture d'extrémité (3) de la deuxième pièce (2);
∘ cette ouverture d'extrémité (3) de la deuxième pièce (2) étant ainsi ouverte, on introduit par celle-ci, dans la poche (5), un produit et/ou un moyen de traitement et/ou de mesure du contenu de la poche (5) et, une fois cette dernière étape terminée,
∘ on monte ou assemble la première pièce (1) à et sur la deuxième pièce (2).

23. Procédé selon la revendication 22, dans lequel le récipient (4) comporte de façon intégrée des moyens (21) de traitement comprenant des moyens de mélange disposés à l'intérieur de la poche (5) en étant adjacents à son fond (6), dans lequel :
∘ l'ouverture d'extrémité (3) du port (2a) du récipient (4) formant la deuxième pièce (2) étant occulté par la première pièce (1) et un orifice (22) d'introduction de produit du récipient étant ouvert, on introduit dans le récipient (4) la quantité souhaitée d'un produit ;
∘ on désassemble la première pièce (1) de la deuxième pièce (2) et on ouvre ainsi l'ouverture d'extrémité (3) de la deuxième pièce (2);
∘ cette ouverture d'extrémité (3) de la deuxième pièce (2) étant ainsi ouverte, on introduit par celle-ci, dans la poche (5), une quantité souhaitée d'un produit ;
∘ on met en oeuvre les moyens (21) de mélange ;
∘ on monte ou assemble la première pièce (1) à et sur la deuxième pièce (2);
∘ et on poursuit la mise en oeuvre des moyens (21) de mélange.

24. Procédé de mise en oeuvre de l'ensemble selon la revendication 20 en ce qu'elle dépend des revendications 12 à 14, dans le cas où la troisième pièce (27) est une poche ouverte à l'opposé de sa partie extrême annulaire (26), en vue d'insérer un produit P dans le récipient (4) via la troisième pièce (poche ouverte 27), dans lequel :
∘ on dispose d'un récipient (4) de stockage ou de traitement comprenant une poche (5) et d'une troisième pièce (poche ouverte 27) raccordée de façon rigide et étanche à la première pièce (1) ;
∘ on associe une pièce de fermeture (30) à la partie extrême (26) de la troisième pièce (poche ouverte 27) et on la manoeuvre pour fermer le passage formé par la partie extrême annulaire (26) ;
∘ la troisième pièce (poche ouverte 27) étant ouverte à l'opposé de sa partie extrême annulaire (26) ainsi fermée, on introduit par celle-ci, dans cette troisième pièce (poche 27), la quantité souhaitée du produit P;
∘ on ferme l'ouverture de la troisième pièce (poche 27) à l'opposé de sa partie extrême annulaire fermée (26);
∘ on monte ou assemble la première pièce (1) à et sur la deuxième pièce (2), aucune communication n'existant alors entre la poche (5) du récipient (4) de stockage ou de traitement et la troisième pièce (poche 27);
∘ lorsque souhaité, on manoeuvre la pièce de fermeture (30) pour ouvrir le passage formé par la partie extrême annulaire (26), une communication étant alors établie entre la poche (5) du récipient (4) de stockage ou de traitement et la troisième pièce (poche 27);
∘ on fait passer le produit inséré dans la troisième pièce (poche 27) dans la poche (5) du récipient de stockage ou de traitement (4).

25. Procédé de mise en oeuvre de l'ensemble selon la revendication 20 en ce qu'elle dépend des revendications 12 à 15, dans le cas où la troisième pièce (27) est une poche fermée à l'opposé de sa partie extrême annulaire (26), en vue d'insérer un produit P dans le récipient (4) via la troisième pièce (poche fermée 27), dans lequel :
∘ on dispose d'un récipient (4) de stockage ou de traitement comprenant une poche (5) et d'une troisième pièce (poche fermée 27) raccordée de façon rigide et étanche à la première pièce (1) ;
∘ la troisième pièce (poche 27) étant ouverte à sa partie extrême annulaire (26), on introduit par celle-ci, dans cette troisième pièce (poche 27), la quantité souhaitée du produit P ;
∘ on associe une pièce de fermeture (30) à la partie extrême (26) de la troisième pièce (poche 27) et on la manoeuvre pour fermer le passage formé par la partie extrême annulaire (26);
∘ on monte ou assemble la première pièce (1) à et sur la deuxième pièce (2), aucune communication n'existant alors entre la poche (5) du récipient (4) de stockage ou de traitement et la troisième pièce (poche 27) renfermant le produit P;
∘ lorsque souhaité, on manoeuvre la pièce de fermeture (30) pour ouvrir le passage formé par la partie extrême annulaire (26), une communication étant alors établie entre la poche (5) du récipient (4) de stockage ou de traitement et la troisième pièce (poche 27) ;
∘ on fait passer le produit P inséré dans la troisième pièce (poche 27) dans la poche (5) du récipient (4) de stockage ou de traitement.

## Patentansprüche

1. Konstruktion, insbesondere vorgesehen für den Bereich der Biopharmazeutik, umfassend ein erstes Montageteil (1) und ein zweites Teil (2), wobei das zweite Teil (2) hohl ist, und umfassend eine durch einen starren ringförmigen Flansch (8) abgegrenzte Endöffnung (3), aufweisend an der Seite der Öffnung (3) eine nach außen gerichtete Auskragung (9), wobei die Außenfläche (10) des Flansches (8) ein Teil (10a) mit größerem Durchmesser zur Auskragung (9) und Öffnung (3), ein Teil (10b) mit kleinerem Durchmesser mit Abstand zur Auskragung (9) und Öffnung (3) und ein Zwischenteil (10c) umfasst, wobei das erste Teil (1) im Bereich der Biopharmazeutik fest und starr, unbeweglich und dicht auf dem starren ringförmigen Flansch (8) des zweiten Teils (2) montiert ist, wobei das erste Teil (1) in der Achse XX eine in die Öffnung (3) ragende Querwand (14) und eine Schürze bildende ringförmige Umfangswand (15) umfasst, deren Innenseite (15a) die Außenseite (10) des Flansches (8) berührt, wobei die Querwand (14) und die Schürze (15) in integrierter Weise aus einem Material bestehen, das eine intrinsische Dichtheit für den Bereich der Biopharmazeutik bietet und einen hohen Grad an Elastizität aufweist, was dem ersten Teil (1) ermöglicht, das im inaktiven Zustand eine vorgegebene natürliche Form aufweist, gekrümmt zu werden, ohne beschädigt zu werden, so dass es ausgehend von seinem inaktiven Zustand quer gezogen und gedehnt werden kann, um an das zweite Teil (2) aufgeschoben oder von diesem abgeschoben zu werden, wobei:
∘ die Innenwand (14a) der fortlaufenden und massiven oder wenigstens eine Durchgangsöffnung (23) aufweisenden Querwand (14) einen im Wesentlichen ebenen Mittelbereich und einen am Umfang des ersten Teils (1) angeordneten und einen im Wesentlichen ebenen Fortlauf gegenüber dem Mittelbereich aufweisenden Randbereich umfasst, um ein gegen diesem anliegenden und an der Dichtheit zwischen den zwei Teilen (1, 2) angeordnetes gekoppeltes Teil einer Endkante (11) des Flansches (3) zu bilden;
∘ das erste Teil (1) zum schnellen Einsetzen und Entfernen des zweiten Teils (2), das zum Abdichten des zweiten Teils (2) dient, wenn die Querwand (14) durchlaufend und massiv ist, oder sich bündig in Verbindung mit dem zweiten Teil (2) befindet, wenn die Querwand (14) eine Durchgangsöffnung (23) aufweist,
**dadurch gekennzeichnet, dass** die Innenwand der Schürze (15) ein an die Querwand (14) angrenzendes zylindrisches Teil (39a) mit größerem Durchmesser, ein zylindrisches Teil (39b) mit kleinerem Durchmesser und Abstand zur Querwand (14) und ein schräges kegelstumpfförmiges Zwischenteil (39c) umfasst, so dass im aktiven Zustand, in dem das erste Teil (1) auf dem zweiten Teil (2) montiert ist, die Teile (39a, 39b und 39c) der Schürze (15) jeweils in Kontakt mit elastischer Klemmung zum Halten und Abdichten auf den gekoppelten Teilen (10a, 10b und 10c) der Außenseite (10) des Flansches (8) des zweiten Teils (2) kommen.

2. Konstruktion nach Anspruch 1, **dadurch gekennzeichnet, dass** das Zwischenteil (39c) der Innenseite (15a) der Schürze (15) eine Kegelstumpfform aufweist, die in der Achse XX einen Neigungswinkel in der Größenordnung von 45° aufweist.

3. Konstruktion nach einem der Ansprüche 1 und 2, **dadurch gekennzeichnet, dass** die Querwand (14) eine geringere Stärke als die der Schürze (15) aufweist und/oder dass die Stärke der Schürze (15) senkrecht zum Teil (39a) mit größerem Durchmesser größer ist als die Stärke senkrecht zum Teil (39b) mit kleinerem Durchmesser.

4. Konstruktion nach einem der Ansprüche 1 bis 3, wenn die Querwand (14) eine Durchgangsöffnung (23) umfasst, **dadurch gekennzeichnet, dass** das erste Teil (1) ferner ein die Öffnung (23) abgrenzendes rohrförmiges Teil (24) umfasst, das mit der Querwand (14) verbunden ist, um eine sich nach der Außenseite und/oder nach der Innenseite der Querwand (14) erstreckende starre Konstruktion zu bilden, wobei das mit dem rohrförmigen Teil (24) ausgestattete erste Teil (1) eine Funktion zum Anschließen und starren Befestigen und als Übergang und zum Übertragen sicherstellt, wobei das sich nach der Außenseite der Querwand (14) erstreckende rohrförmige Teil (24) zum Aufnehmen und starren sowie auf eine dichte Weise zum Befestigen des ringförmigen Endteils (26) eines dritten Teils (27) geeignet ist.

5. Konstruktion nach Anspruch 4, **gekennzeichnet durch** ein sich zur Außenseite der Querwand (14) erstreckendes rohrförmiges Teil (24), umfassend eine rohrförmige Wand (40) für die Aufnahme und die starre sowie dichte Befestigung des ringförmigen Endteils (26) des dritten Teils (27) und an einem Ende der rohrförmigen Wand (40) einen Flansch (32) zur starren Befestigung am Teil (34) der Querwand (14) zum Bilden des Rands der Öffnung (23).

6. Konstruktion nach Anspruch 5, **gekennzeichnet durch** ein rohrförmiges Teil (24), umfassend eine nach der Außenseite der rohrförmigen Wand (40) äußere zylindrische Wand (28), bereitstellend mit der Wand (40) eine ringförmige zylindrische Aufnahme (28a) zum Aufnehmen des ringförmigen Endteils (26) des dritten Teils (27) und/oder eine mit dieser bildenden starren Konstruktion, einen nach außen gerichteten Querflansch (25), der ein Federmittel des dritten Teils (27) bilden kann, zusammenwirkend mit einer mit einem Loch (42) versehenen Stützwand (41).

7. Konstruktion nach einem der Ansprüche 1 bis 3, wenn die Querwand (14) eine Durchgangsöffnung (23) aufweist, **gekennzeichnet durch** ein drittes Teil (27) mit einem ringförmigen Endteil (26), das direkt an das Teil (34) der Querwand (14) befestigt werden kann oder ist, das den Rand der Öffnung (23) bildet, wobei das dritte Teil (27) eine gegenüber dem ringförmigen Endteil (26) offene oder nicht offene Taschenform oder eine Rohrform aufweist.

8. Konstruktion nach einem der Ansprüche 3 bis 7, **gekennzeichnet durch** ein mit dem dritten Teil (27), gegebenenfalls mit dem rohrförmigen Teil (24), verbundenes Verschlussstück (30) mit der Funktion zum Öffnen oder Schließen des durch den ringförmigen Endteil (26) gebildeten Durchgangs.

9. Konstruktion nach einem der Ansprüche 1 bis 8, **gekennzeichnet durch** ein erstes ringförmiges Umfangdichtmittel (16) in der Form eines im Querschnitt abgerundeten Wulsts und in der Nähe der Schürze (15) angeordnet ist, und ein zweites gekoppeltes ringförmiges Umfangdichtmittel (12) in der Form einer im Querschnitt abgerundeten Nut, die auf der Endkante (11) des Flansches (8) ausgebildet ist.

10. Konstruktion nach einem der Ansprüche 1 bis 9, **dadurch gekennzeichnet, dass** das erste Teil (1) ferner wenigstens eine an den freien Rand (18) der Schürze (15) und mit dieser integrierte äußere Umfangslasche (17) umfasst, die zum Einsetzen und/oder Entfernen des ersten Teils (1) auf dem und/oder vom Flansch (8) des zweiten Teils (2) beitragen kann.

11. Konstruktion nach einem der Ansprüche 1 bis 10, **dadurch gekennzeichnet, dass** das erste Teil (1) aus Silikon oder einem gleichwertigen Material oder aus einem Material mit einer Shore-Härte in der Größenordnung von 55 ShA und einer elastischen Dehnfähigkeit entsprechend dem Größenunterschied des ersten Teils (1) zwischen seinem inaktivem Zustand und seinem Zwischenzustand, so dass sowohl im Zwischenzustand als auch im aktiven Zustand das erste Teil (1) eine elastische Verformung gegenüber seinem inaktiven Zustand aufweist, in dem es keine elastische Verformung aufweist, und dass im aktiven Zustand seine elastische Verformung so gestaltet ist, dass sie den Flansch (8) des zweiten Teils (2) elastisch klemmt, um ein Dichthalten sicherzustellen, und insbesondere aus einem antistatischen Material besteht.

12. Konstruktion nach einem der Ansprüche 1 bis 11, **dadurch gekennzeichnet, dass** das zweite Teil (2) ein Anschluss (2a) ist, der Teil eines Gefäßes (4) zum Speichern oder Behandeln ist, umfassend ferner eine Tasche (5) mit einem Boden (6) und gegenüber dem Boden (6) eine Öffnung (7), die vorgesehen ist, mit dem zweiten Teil (2) gegenüber seiner Endöffnung (3) starr verbunden zu werden, bzw. mit diesem starr verbunden ist, und eine flexible Seitenwand (20), die sich in zwei Endzuständen, bzw. flach gefaltet und entfaltet, befinden kann, und sich in jedem Zwischenzustand verformen kann, um von einem Zustand in einen anderen überzugehen.

13. Konstruktion nach Anspruch 12, **dadurch gekennzeichnet, dass** das Gefäß (4) in integrierter Weise Mittel (21) zum Behandeln seines Inhalts umfasst.

14. Konstruktion nach einem der Ansprüche 12 und 13, wobei der Anspruch 13 von Anspruch 7 abhängt, **dadurch gekennzeichnet, dass** das zweite Teil (2) einen Anschluss (2a) bildet, ferner Mittel zum Schutz der Mittel (21) zum Behandeln darstellt, wobei ihr aktives Innenteil im Wesentlichen im Innenraum des zweiten Teils (2) angeordnet ist, das den Anschluss (2a) bildet, wenn sich die Tasche (5) im flach gefalteten Zustand befindet, wobei das Randteil des Innenraums des zweiten Teils (2), das den Anschluss (2a) bildet, eine Kammer zum Schutz der Tasche (5) und der Mittel (21) zum Behandeln bildet.

15. Konstruktion nach einem der Ansprüche 13 und 14, **dadurch gekennzeichnet, dass** die Mittel (21) zum Behandeln wenigstens teilweise innerhalb der Tasche (5) angrenzend an ihren Boden (6) gegenüber dem zweiten Teil (2) angeordnet sind, das den Anschluss (2a) bildet.

16. Konstruktion nach einem der Ansprüche 1 bis 15, **dadurch gekennzeichnet, dass** das zweite Teil (2) ein Rohr ist.

17. Konstruktion nach einem der Ansprüche 1 bis 16, wobei die Querwand (14) durchgehend und massiv ist, und wobei das erste Teil (1) zum Verschließen des zweiten Teils (2) dient.

18. Konstruktion nach einem der Ansprüche 1 bis 16, wobei die Querwand (14) wenigstens eine Durchgangsöffnung (23) umfasst und wobei das erste Teil (1) bündig in Verbindung mit dem zweiten Teil (2) ist.

19. Konstruktion nach Anspruch 18, **dadurch gekennzeichnet, dass** sie das dritte Teil (27) umfassend einen starr und dicht am ersten Teil (1) direkt oder über das rohrförmige Teil (24) angeschlossenes ringförmiges Endteil (26) und ferner insbesondere ein mit dem dritten Teil (27), gegebenenfalls mit dem rohrförmigen Teil (24), verbundenes Verschlussstück (30) zum Öffnen oder Schließen des vom ringförmigen Endteil (26) gebildeten Durchgangs umfasst.

20. Verfahren zum Montieren oder Zusammenbauen des ersten Montageteils (1) am und auf dem zweiten Teil (2) der Konstruktion nach einem der Ansprüche 1 bis 19, wobei:
∘ Bereitstellen eines ersten Teils (1) und ein zweiten Teils (2), die nicht miteinander montiert oder zusammengebaut sind;
∘ durch eine ausreichende äußere, insbesondere manuelle Belastung wenigstens der Schürze (15) des ersten Teils die letztere bis zu einem Durchmesser wenigstens etwas größer als der maximale Außendurchmesser des Flansches (8) zur Öffnung (3) ausgedehnt wird, wobei man im Bereich der elastischen Verformung bleibt;
∘ das erste Teil (1) in Bezug auf die und in der Achse des zweiten Teils (2) positioniert wird;
∘ die Schürze (15) auf den Flansch (8) aufgeschoben und das erste Teil (1) axial auf das zweite Teil (2) positioniert wird;
∘ in dieser Position die Belastung des ersten Teils (1) eingestellt wird;
∘ so dass, in dieser Situation, in der das erste Teil (1) in aktivem Zustand auf dem zweiten Teil (2) montiert oder zusammengebaut ist, die Teile (39a, 39b und 39c) der Schürze (15) in Kontakt mit elastischer Klemmung zum Halten und Abdichten auf den gekoppelten Teilen (10a, 10b und 10c) der Außenseite (10) des Flansches (8) des zweiten Teils (2) kommen.

21. Verfahren zum Abbauen des ersten Montageteils (1) vom zweiten Teil (2) der Konstruktion nach einem der Ansprüche 1 bis 19, wobei:
∘ Bereitstellen eines ersten Teils (1) und eines zweiten Teils (2), die mit und auf dem anderen montiert oder zusammengebaut sind;
∘ durch eine ausreichende äußere, insbesondere manuelle Belastung wenigstens der Schürze (15) des ersten Teils (1) die letztere bis zu einem Durchmesser wenigstens etwas größer als der maximale Außendurchmesser des Flansches (8) zur Öffnung (3) ausgedehnt wird;
∘ das erste Teil (1) vom zweiten Teil (2) abgeschoben wird, bis die zwei Teile (1, 2) auseinandergebaut sind.

22. Verfahren zum Ausführen der Konstruktion nach Anspruch 17, wobei dieser von den Ansprüchen 12 bis 14 abhängt, wobei:
∘ Bereitstellen eines Gefäßes zum Speichern oder Behandeln (4);
∘ von einer Situation ausgegangen wird, in der:
▪ sich die Tasche (5) des Gefäßes (4) im flach gefalteten Zustand befindet,
▪ die Endöffnung (3) des Anschlusses (2a) des Gefäßes (4), der das zweite Teil (2) bildet, vom nach oben angeordneten und auf dem zweiten Teil (2) montierten und mit diesem verbundenen ersten Teil (1) verdeckt ist, und
▪ die Tasche (5) mit ihrem Boden auf dem Boden des Behälters (19) angeordnet ist;
∘ eine Öffnung zum Einführen (22) eines Produkts des Gefäßes (4) geöffnet ist, in der schrittweise in das Gefäß (4) ein Produkt eingeführt wird und gleichzeitig ermöglich wird, dass sich die Tasche (5) nach oben entfaltet und vom Behälter (19) befüllt wird, bis in das Gefäß (4) die gewünschte Menge des Produkts eingeführt ist;
∘ das zweite Teil (1) vom zweiten Teil (2) abgebaut wird und somit die Endöffnung (3) des zweiten Teils (2) geöffnet wird;
∘ bei somit geöffneter Endöffnung (3) des zweiten Teils (2) durch diese in die Tasche (5) ein Produkt und/oder ein Mittel zum Behandeln und/oder Messen des Inhalts der Tasche (5) eingeführt wird und nach dem Abschluss dieses letzten Schritts,
∘ das erste Teil (1) am und auf dem zweiten Teil (2) montiert oder angebaut wird.

23. Verfahren nach Anspruch 22, wobei das Gefäß (4) in integrierter Weise Mittel (21) zum Behandeln umfassend im Inneren der Tasche (5) angrenzend an ihrem Boden (6) angeordnete Mittel zum Mischen umfasst, wobei
∘ die Endöffnung (3) des Anschlusses (2a) des Gefäßes (4), die das zweite Teil (2) bildet, durch das erste Teil (1) verdeckt ist und eine Öffnung (22) zum Einführen von Produkt des Gefäßes in das Gefäß (4) geöffnet ist, in der die gewünschte Menge eines Produkts eingeführt wird;
∘ das erste Teil (1) vom zweiten Teil (2) abgebaut wird und somit die Endöffnung (3) des zweiten Teils (2) geöffnet wird;
∘ diese Endöffnung (3) des zweiten Teils (2) ist somit geöffnet, durch die in die Tasche (5) eine gewünschte Menge eines Produkts eingeführt wird;
∘ die Mittel (21) zum Mischen ausgeführt werden;
∘ das erste Teil (1) am und auf dem zweiten Teil (2) montiert oder angebaut wird;
∘ und die Ausführung der Mittel (21) zum Mischen fortgesetzt wird.

24. Verfahren zum Ausführen der Konstruktion nach Anspruch 20, wobei dieser von den Ansprüchen 12 bis 14 abhängt, wenn das dritte Teil (27) eine gegenüber seines ringförmigen Endteils (26) offene Tasche ist, um ein Produkt P in das Gefäß (4) über das dritte Teil (offene Tasche (27)) einzuführen, wobei:
∘ Bereitstellen eines Gefäßes (4) zum Speichern oder Behandeln umfassend eine Tasche (5) und ein am ersten Teil (1) auf starre und dichte Weise angeschlossenes drittes Teil (offene Tasche (27)) vorhanden ist;
∘ ein Verschlussstück (30) am Endteil (26) des dritten Teils (offene Tasche (27)) angebracht wird und dieses zum Schließen des vom ringförmigen Endteil (26) gebildeten Durchgangs betätigt wird;
∘ das dritte Teil (offene Tasche (27)) gegenüber seinem somit geschlossenen ringförmigen Endteil (26) geöffnet ist, über dieses dritte Teil (Tasche (27)) die gewünschte Menge des Produkts P eingeführt wird;
∘ die Öffnung des dritten Teils (Tasche (27)) gegenüber seinem geschlossenen ringförmigen Endteil (26) geschlossen wird;
∘ das dritte Teil (1) am und auf dem zweiten Teil (2) montiert oder angebaut wird, wobei keine Verbindung zwischen der Tasche (5) des Gefäßes (4) zum Speichern und Behandeln und dem dritten Teil (Tasche (27)) besteht;
∘ falls gewünscht das Verschlussteil (30) zum Öffnen des vom ringförmigen Endteil (26) gebildeten Durchgangs betätigt wird, wobei eine Verbindung zwischen der Tasche (5) des Gefäßes (4) zum Speichern und Behandeln und dem dritten Teil (Tasche (27)) hergestellt wird;
∘ das in das dritte Teil (Tasche (27)) eingeführte Produkt in die Tasche (5) des Gefäßes zum Speichern oder Behandeln (4) geführt wird.

25. Verfahren zum Ausführen der Konstruktion nach Anspruch 20, wobei dieser von den Ansprüchen 12 bis 15 abhängt, wenn das dritte Teil (27) eine gegenüber seines ringförmigen Endteils (26) geschlossene Tasche ist, um ein Produkt P in das Gefäß (4) über das dritte Teil (geschlossene Tasche (27)) einzuführen, wobei:
∘ Bereitstellen eines Gefäßes (4) zum Speichern oder Behandeln umfassend eine Tasche (5) und ein am ersten Teil (1) auf starre und dichte Weise angeschlossenes drittes Teil (geschlossene Tasche (27)) vorhanden ist;
∘ das dritte Teil (geschlossene Tasche (27)) an seinem ringförmigen Endteil (26) geöffnet ist, über dieses dritte Teil (Tasche (27)) die gewünschte Menge des Produkts P eingeführt wird;
∘ ein Verschlussstück (30) am Endteil (26) des dritten Teils (geschlossene Tasche (27)) angebracht wird und dieses zum Schließen des vom ringförmigen Endteil (26) gebildeten Durchgangs betätigt wird;
∘ das dritte Teil (1) am und auf dem zweiten Teil (2) montiert oder angebaut wird, wobei keine Verbindung zwischen der Tasche (5) des Gefäßes (4) zum Speichern und Behandeln und dem das Produkt P einschließenden dritten Teil (Tasche (27)) besteht;
∘ falls gewünscht das Verschlussteil (30) zum Öffnen des vom ringförmigen Endteil (26) gebildeten Durchgangs betätigt wird, wobei eine Verbindung zwischen der Tasche (5) des Gefäßes (4) zum Speichern und Behandeln und dem dritten Teil (Tasche (27)) hergestellt wird;
∘ das in das dritte Teil (Tasche (27)) eingeführte Produkt P in die Tasche (5) des Gefäßes (4) zum Speichern oder Behandeln geführt wird.

## Claims

1. Assembly, specially intended for the biopharmaceutical field, comprising a first mounting piece (1) and a second piece (2), the second piece (2) being hollow, and comprising an end opening (3) bordered by a rigid annular collar (8), having an outward bulge (9) near the opening (3), the outer face (10) of the collar (8) comprising a portion (10a) of greater diameter towards the bulge (9) and the opening (3), a portion (10b) of smaller diameter offset from the bulge (9) and the opening (3), and an intermediate portion (10c), the first piece (1) being in the biopharmaceutical field mounted rigidly and fixedly, removably and fluidtight, on the rigid annular collar of the second piece (2), the first piece (1) of axis XX comprising a transverse wall (14) coming into the opening (3) and a peripheral annular wall (15) forming a skirt, its inner face (15a) coming into contact with the outer face (10) of the collar (8), the transverse wall (14) and the skirt (15), made as one piece, being of a material providing an intrinsic fluidtightness for the biopharmaceutical field and having a high degree of flexibility, allowing the first piece (1), which in the inactive state has a predefined natural form, to be bent without being damaged so that from its inactive state it can be stretched transversely and expanded to allow pushing it onto or pulling it off the second piece (2),
wherein:
∘ the inner face (14a) of the transverse wall (14), continuous and solid or having at least one through-opening (23), comprises a substantially flat central area and a marginal area positioned around the periphery of the first piece (1) and having a substantially flat continuity with the central area in order to form a mating portion of an end edge (11) of the collar (3) applied against it and contributing to the seal between the two pieces (1, 2);
∘ the first piece (1), with rapid setup and removal of the second piece (2), closing off the second piece (2) when the transverse wall (14) is continuous and solid, or being connected in communication with the second piece (2) when the transverse wall (14) has a through-opening (23).
wherein the inner face of the skirt (15) includes a cylindrical portion (39a) of larger diameter adjoining the transverse wall (14), a cylindrical portion (39b) of smaller diameter offset from the transverse wall (14), and a tapered frustoconical intermediate portion (39c), such that, in the active state where the first piece (1) is mounted on the second piece (2), the portions (39a, 39b, and 39c) of the skirt (15) respectively come into a resiliently gripping contact that maintains and seals the respective mating portions (10a, 10b, and 10c) of the outer face (10) of the collar (8) of the second piece (2).

2. Assembly according to claim 1, wherein the intermediate portion (39c) of the inner face (15a) of the skirt (15) has a frustoconical shape, having an angle of inclination of about of 45° to axis XX.

3. Assembly according to any of claims 1 and 2, wherein the transverse wall (14) has a smaller thickness than that of the skirt (15) and/or the thickness of the skirt (15) near the portion (39a) of larger diameter is larger than the thickness perpendicular to the portion (39b) of smaller diameter.

4. Assembly according to any of claims 1 to 3 in the case where the transverse wall (14) has a through-opening (23), wherein the first piece (1) further comprises a tubular piece (24) defining the opening (23), integrally secured to the transverse wall (14) to form a rigid assembly extending outwardly and/or inwardly from the transverse wall (14), the first piece (1) provided with the tubular piece (24) performing a function of rigid connection and attachment and of passage or transfer, the tubular piece (24) extending outwardly from the transverse wall (14) being adapted for receiving and for rigidly and sealingly fixing the annular end portion (26) of a third piece (27).

5. Assembly according to claim 4, **characterized by** a tubular piece (24) extending outwardly from the transverse wall (14), having a tubular wall (40) for receiving and for rigidly and sealingly fixing the annular end portion (26) of the third piece (27) and at one end of the tubular wall (40), a collar (32) for rigidly fixing to the portion (34) of the transverse wall (14) forming the edge of the opening (23).

6. Assembly according to claim 5, **characterized by** a tubular piece (24) having, towards the outside of the tubular wall (40), an outer cylindrical wall (28), forming with wall (40) an annular cylindrical housing (28a) for receiving the annular end portion (26) of the third piece (27) and/or forming a rigid unit with it, an outwardly directed transverse collar (25) adapted to form a means for suspending the third piece (27), cooperating with a support wall (41) provided with a hole (42).

7. Assembly according to any of claims 1 to 3 in the case where the transverse wall (14) has a through-opening (23), **characterized by** a third piece (27) having an annular end portion (26), which is adapted to be, or is, fixed directly to the portion (34) of the transverse wall (14) forming the edge of the opening (23), the third piece (27) having either the shape of a pouch, possibly open, opposite to the annular end portion (26), or a tube shape.

8. Assembly according to any of claims 3 to 7, **characterized by** a closure piece (30) associated with the third piece (27), if appropriate having the tubular piece (24), serving the function of opening or closing the passage formed by the annular end portion (26).

9. Assembly according to any of claims 1 to 8, **characterized by** a first annular peripheral sealing means (16) in the form of a bead with a rounded cross-section and located close to the skirt (15), and a mating second annular peripheral sealing means (12) in the form of a groove with a rounded cross-section, formed on the end edge (11) of the collar (8).

10. Assembly according to any of claims 1 to 9, wherein the first piece (1) further comprises at least one outer peripheral tab (17) adjacent to the free edge (18) of the skirt (15) and forming one piece with it, able to contribute to the placement and/or removal of the first piece (1) onto and/or off the collar (8) of the second piece (2).

11. Assembly according to any of claims 1 to 10, wherein the first piece (1) is made of silicone or equivalent material or of a material having a Shore hardness of about 55ShA and an elastic stretchability that is a function of the difference in size of the first piece (1) between its inactive state and its intermediate state, such that in both the intermediate state and the active state, the first piece (1) presents elastic deformation in comparison to its inactive state where it does not present elastic deformation, and in the active state its elastic deformation is such that it resiliently clamps the collar (8) of the second piece (2) to ensure fluidtight retention, and in particular of an antistatic material.

12. Assembly according to any of claims 1 to 11, wherein the second piece (2) is a port (2a) forming part of a storage or processing vessel (4), further comprising a bag (5) having a bottom (6) and opposite the bottom (6) an opening (7) intended to be rigidly associated, respectively rigidly associated, with the second piece (2) opposite its end opening (3), and a flexible side wall (20) which can be in two extreme states, respectively folded flat and deployed, and in any intermediate state, and which can be deformed to change from one state to another.

13. Assembly according to claim 12, wherein the vessel (4) comprises integrated means (21) for processing its contents.

14. Assembly according to any of claims 12 and 13 when claim 13 is dependent on claim 7, wherein the second piece (2) forming the port (2a) further constitutes protection means for the processing means (21), their active inner portion being substantially arranged in the inner space of the second piece (2) forming the port (2a) when the bag (5) is in the folded flat state, the peripheral portion of the inner space of the second piece (2) forming the port (2a) forming a protective chamber for the bag (5) and the processing means (21).

15. Assembly according to any of claims 13 and 14, wherein the processing means (21) are at least partly arranged inside the bag (5) while being adjacent to its bottom (6), opposite the second piece (2) forming the port (2a).

16. Assembly according to any of claims 1 to 15, wherein the second piece (2) is a tube.

17. Assembly according to any of claims 1 to 16, wherein the transverse wall (14) is continuous and solid, the first piece (1) closing off the second piece (2).

18. Assembly according to any of claims 1 to 16, wherein the transverse wall (14) has at least one through-opening (23), the first piece (1) connecting in communication with the second piece (2).

19. Assembly according to claim 18, wherein it comprises the third piece (27) comprising an annular end portion (26) rigidly and sealingly connected to the first piece (1), directly or by means of the tubular piece (24), and furthermore, in particular, a closure piece (30) associated with the third piece (27), if appropriate with the tubular piece (24), having the function of opening or closing the passage formed by the annular end portion (26).

20. Method for mounting or assembling the first mounting piece (1) to and onto the second piece (2) of the assembly according to any of claims 1 to 19, wherein:
∘ a first piece (1) and a second piece (2) are provided which are not mounted or assembled to each other;
∘ by applying sufficient external force, in particular manually, on at least the skirt (15) of the first piece (1), the latter is expanded while remaining within the range of elastic deformation, to a diameter at least slightly larger than the maximum outer diameter of the collar (8) near the opening (3);
∘ the first piece (1) is positioned facing and in the axis of the second piece (2);
∘ the skirt (15) is threaded onto the collar (8), and the first piece (1) is axially positioned on the second piece (2);
∘ in this position, the application of force to the first piece (1) is stopped;
∘ such that, in this situation where the first piece (1), in the active state, is mounted or assembled to the second piece (2), portions (39a, 39b, and 39c) of the skirt (15) establish a contact with resilient clamping and sealing retention on the mating portions (10a, 10b, and 10c) of the outer face (10) of the collar (8) of the second piece (2).

21. Method for disassembling the first mounting piece (1) from the second piece (2) of the assembly according to any of claims 1 to 19, wherein:
∘ a first piece (1) and a second piece (2) mounted or assembled to each other are provided;
∘ by applying sufficient external force, in particular manually, on at least the skirt (15) of the first piece (1), the latter is expanded to a diameter at least slightly larger than the maximum outer diameter of the collar (8) near the opening (3);
∘ the first piece (1) is unthreaded from the second piece (2) until the two pieces (1, 2) are disassembled.

22. Method for implementing the assembly according to claim 17 when dependent on claims 12 to 14, wherein:
∘ a storage or processing vessel (4) is provided;
∘ one begins in a situation where:
• the bag (5) of the vessel (4) is in the folded flat state,
• the end opening (3) of the port (2a) of the vessel (4) forming the second piece (2) is hidden by the first piece (1) arranged at the top and mounted on and assembled to the second piece (2), and
• the bottom of the bag (5) is positioned on the bottom of the container (19);
∘ a product inlet opening (22) of the vessel (4) being open, product is gradually introduced into the vessel (4) and simultaneously the bag (5) is allowed to deploy upward and expand in volume within the container (19) until the desired amount of product has been introduced into the vessel (4);
∘ the first piece (1) is disassembled from the second piece (2) which thus opens the end opening (3) of the second piece (2);
∘ this end opening (3) of the second piece (2) thus being open, a product and/or a means for processing and/or measuring the contents of the bag (5) is introduced via said opening into the bag (5), and once this last step is completed,
∘ the first piece (1) is mounted or assembled to and onto the second piece (2).

23. Method according to claim 22, wherein the vessel (4) comprises integrated processing means (21) comprising mixing means arranged within the bag (5) while being adjacent to its bottom (6), wherein:
∘ the end opening (3) of the port (2a) of the vessel (4) forming the second piece (2) being hidden by the first piece (1) and a product inlet opening (22) of the vessel being open, the desired amount of a product is introduced into the vessel (4);
∘ the first piece (1) is disassembled from the second piece (2) which thus opens the end opening (3) of the second piece (2);
∘ this end opening (3) of the second piece (2) thus being open, a desired amount of a product is introduced by said opening into the bag (5);
∘ use is made of the mixing means (21);
∘ the first piece (1) is mounted or assembled on and onto the second piece (2);
∘ continued use is made of the mixing means (21).

24. Method for making use of an assembly according to claim 20 when dependent on claims 12 to 14, in the case where the third piece (27) is a pouch that is open opposite its annular end portion (26), for the purposes of inserting a product P into the vessel (4) via the third piece (open pouch 27), wherein:
∘ a storage or processing vessel (4) is provided comprising a bag (5) and a third piece (open pouch 27) rigidly and sealingly connected to the first piece (1);
∘ a closure piece (30) is associated with the end portion (26) of the third piece (open pouch 27) and this is manipulated to close the passage formed by the annular end portion (26);
∘ the third piece (open pouch 27) being open opposite to its thusly closed annular end portion (26), the desired amount of product P is introduced thereby into this third piece (pouch 27);
∘ the opening of the third piece (pouch 27) opposite to its closed end annular portion (26) is closed;
∘ the first piece (1) is mounted or assembled to and onto the second piece (2), no communication then existing between the bag (5) of the storage or processing vessel (4) and the third piece (pouch 27);
∘ when desired, the closure piece (30) is manipulated to open the passage formed by the annular end portion (26), a communication then being established between the bag (5) of the storage or processing vessel (4) and the third piece (pouch 27);
∘ the product inserted into the third piece (pouch 27) passes into the bag (5) of the storage or processing vessel (4).

25. Method for making use of an assembly according to claim 20 when dependent on claims 12 to 15, in the case where the third piece (27) is a pouch that is closed opposite its annular end portion (26), for the purposes of introducing a product P into the vessel (4) via the third piece (closed pouch 27), wherein:
∘ a storage or processing vessel (4) is provided comprising a bag (5) and a third piece (closed pouch 27) rigidly and sealingly connected to the first piece (1);
∘ the third piece (pouch 27) being open at its annular end portion (26), the desired amount of product P is thereby introduced into this third piece (pouch 27);
∘ a closure piece (30) is associated with the end portion (26) of the third piece (pouch 27) and this is manipulated to close the passage formed by the annular end portion (26);
∘ the first piece (1) is mounted or assembled to and onto the second piece (2), no communication then existing between the bag (5) of the storage or processing vessel (4) and the third piece (pouch 27) containing the product P;
∘ when desired, the closure piece (30) is manipulated to open the passage formed by the annular end portion (26), a communication then being established between the bag (5) of the storage or processing vessel (4) and the third piece (pouch 27);
∘ the product P inserted into the third piece (pouch 27) passes into the bag (5) of the storage or processing vessel (4).
